# EUROPÄISCHE PATENTANMELDUNG

(11) **EP 2 123 543 A1**
(43) Veröffentlichungstag der Anmeldung: **25.11.2009**
(21) Anmeldenummer: 08103924.0
(22) Anmeldetag: 09.05.2008
(51) Int. Cl.: B62D 53/08, B62D 33/04, B62D 65/00

(54) **Bodenelement für ein Fahrzeug, wie einen Lastkraftwagen, Auflieger oder Anhänger**

(71) Anmelder: Schmitz Cargobull AG, 48341 Altenberge (DE)
(72) Erfinder: Heßling, Alfons, 48683 Ahaus (DE); Küpers, Josef, 48703 Stadtlohn (DE); Beelmann, Reinhard, Dipl.-Ing., 45721 Haltern am See (DE)
(74) Vertreter: Cohausz & Florack

(57) **Zusammenfassung**

Die Erfindung betrifft ein Bodenelement für ein Fahrzeug, wie einen Lastkraftwagen, Auflieger oder Anhänger, mit einer oberen Decklage (1), deren freie Oberfläche eine Ladefläche (F) bildet, auf der eine zu transportierende Last (T) abstellbar ist, und mit einer unteren Decklage (10), die den Abschluss des Bodenelements (B) zur Unterseite (US) des Fahrzeugs (S) bildet, wobei die untere Decklage (10) mindestens auf ihrer freien Unterseite aus einem Blechmaterial, insbesondere einem Stahlblechmaterial, besteht. Indem erfindungsgemäß in dem zwischen den Decklagen (1,10) begrenzten Raum ein Träger (Q2,Q3) angeordnet ist, an dem ein Teilstück (Q1) der unteren Decklage (10) durch Punktverbindungen (Q8,Q9) befestigt ist und der das jeweilige Teilstück (Q1) mit dem an das Teilstück (Q1) jeweils angrenzenden Abschnitt (O) des unteren Bodenelements (B) verbindet, ist es auf einfache weise möglich, ein Teilstück der unteren Decklage gegen ein neues Teilstück auszutauschen.

## Beschreibung

Die Erfindung betrifft ein Bodenelement für ein Fahrzeug, wie einen Lastkraftwagen, Auflieger oder Anhänger.

Solche Bodenelemente werden insbesondere für Kofferaufbauten von Kühlfahrzeugen oder vergleichbaren Transportfahrzeugen verwendet. Dabei übernehmen sie zum einen die Aufgabe, die jeweils zu transportierende Last abzustützen. Zum anderen müssen sie eine gute wärmeisolierende Wirkung besitzen, damit der über das Bodenelement erfolgende Wärmeübergang möglichst klein bleibt. Darüber hinaus sollen solche Bodenelemente ein möglichst geringes Eigengewicht aufweisen, damit die von der Zugmaschine gelieferte Leistung im größtmöglichen Umfang für den Transport der jeweiligen Last genutzt werden kann.

Um diese Anforderungen zu erfüllen, werden beispielsweise für Kofferaufbauten von Kühlfahrzeugen verwendete Bodenelemente heutzutage nach Art von Sandwichkonstruktionen aufgebaut. Sie weisen dazu eine obere Decklage auf, deren freie Oberfläche eine Ladefläche bildet, auf der eine zu transportierende Last abstellbar ist. Um lange Gebrauchsdauern zu ermöglichen, ist die obere Decklage in der Regel mit einer Leichtmetalldeckschicht belegt, die alleine mit der zu transportierenden Last unmittelbar in Kontakt kommt.

Den Abschluss zur Unterseite des Fahrzeugs bildet bei den bekannten Bodenelementen in der Regel eine untere Decklage, die an ihrer freien, der Fahrzeugunterseite zugeordneten Oberfläche durch eine Blechlage abgeschlossen ist.

In dem Raum zwischen der oberen und der unteren Decklage sind dabei quer zur Längsrichtung des Bodenelements ausgerichtete und beabstandet zueinander angeordnete Querstege positioniert. Diese teilen den zwischen den Decklagen vorhandenen Raum in Kammern, die sich quer zur Längsrichtung des Bodenelements erstrecken. Um eine ausreichende Wärmeisolierung zu gewährleisten, sind diese Kammern in der Regel mit einem Schaumstoff gefüllt.

In den Bereichen, in denen das Bodenelement im praktischen Betrieb besonderen Belastungen unterworfen ist, ist die Blechlage der unteren Decklage besonders dick ausgebildet, während in den Bereichen, in denen geringere Belastungen auftreten, eine entsprechend geringere Blechdicke vorgesehen ist. Die Bereiche größerer Dicke der Blechlage werden dabei üblicherweise dadurch gebildet, dass an der Unterseite des Bodenelements auf die dünne, über die gesamte Länge des Bodenelements durchlaufende Blechlage dickere Blechabschnitte aufgelegt werden, die den jeweils besonders belasteten Bereich des Bodenelements in ausreichender Weise verstärken.

Solch ein Bereich ist zum einen die so genannte Scheuerplatte, mit der der Sattelauflieger auf der Sattelkupplung des Zugfahrzeugs aufliegt, der unter Verwendung des Bodenelements gebaut ist. Die Scheuerplatte trägt auch den Königszapfen, über den die Zugkräfte auf den Sattelauflieger übertragen werden.

Zum anderen ist eine größere Blechstärke im der Zugmaschine zugeordneten Frontbereich des Bodenelements vorgeschrieben, der von dem Zugfahrzeug beim An- und Abkuppeln des Sattelaufliegers unterfahren wird. Die dort vorgesehene so genannte "Gleitplatte" ist in der Regel so ausgeführt, dass sie sich ausgehend von der dem Zugfahrzeug zugeordneten Stirnseite des Bodenelements bis zur Scheuerplatte oder darüber hinaus erstreckt.

Die Scheuerplatte und die Gleitplatte werden bei den bekannten Kofferaufbauten beispielsweise mit dem Bodenelement verklebt und zusätzlich durch Verschraubungen gesichert. Alternativ können die Scheuerplatte und die Gleitplatte auch auf die Blechlage des Bodenelements aufgeschweißt sein.

Der voranstehend beschriebene konventionelle Aufbau von Bodenelementen macht es erforderlich, die obere Decklage, die Querstege und die Schaumfüllung sowie die untere Decklage in einer bestimmten Reihenfolge zu dem Bodenelement zusammenzubauen. Typischerweise wird dazu zunächst die obere Decklage gefertigt, anschließend auf die obere Decklage die Querstege und die Schaumfüllung aufgesetzt und dann die untere Decklage auf die Querstege und die Schaumfüllung aufgelegt. Zum Abschluss werden schließlich die Gleitplatte und die Scheuerplatte montiert.

Unabhängig davon, wie die untere Decklage aufgebaut ist, ist es bei den bekannten Bodenelementen jeweils schwierig, für eine Reparatur einzelne Teilstücke aus der unteren Decklage herauszutrennen und durch neue Teilstücke zu ersetzen. Eine solche Reparatur kann beispielsweise im Bereich der Gleitplatte oder der Scheuerplatte in Folge von Verschleiß oder einer Beschädigung erforderlich werden, zu der es beim Unterfahren des Bodenelements mit der Sattelkupplung einer Zugmaschine kommen kann.

Vor diesem Hintergrund lag der Erfindung die Aufgabe zu Grunde, ein Bodenelement zu schaffen, bei dem es auf einfache Weise möglich ist, ein Teilstück der unteren Decklage gegen ein neues Teilstück auszutauschen.

Diese Aufgabe ist erfindungsgemäß durch ein Bodenelement mit den in Anspruch 1 angegebenen Merkmalen gelöst worden. Vorteilhafte Ausgestaltungen eines solchen Bodenelements sind in den auf Anspruch 1 rückbezogenen Ansprüchen angegeben.

Ein erfindungsgemäßes Bodenelement für ein Fahrzeug, insbesondere einen Kofferaufbau für ein Kühlfahrzeug oder desgleichen, weist in Übereinstimmung mit dem Stand der Technik eine obere Decklage, deren freie Oberfläche eine Ladefläche bildet, auf der eine zu transportierende Last abstellbar ist, und eine untere Decklage auf, die den Abschluss des Bodenelements zur Unterseite des Fahrzeugs hin bildet. Die untere Decklage besteht dabei mindestens auf ihrer freien Unterseite aus einem Blechmaterial, insbesondere einem Stahlblechmaterial.

Erfindungsgemäß ist nun bei einem solchen Bodenelement in dem zwischen den Decklagen begrenzten Raum ein Träger angeordnet, an dem ein Teilstück der unteren Decklage durch Punktverbindungen befestigt ist und der das jeweilige Teilstück mit dem an das Teilstück jeweils angrenzenden Abschnitt des unteren Bodenelements verbindet. Der erfindungsgemäß vorgesehene Träger bildet auf diese Weise ein Verbindungsstück, das nicht nur das jeweilige Teilstück mit dem angrenzenden Abschnitt des unteren Bodenelements verkoppelt, sondern insbesondere auch dazu genutzt werden kann, ein neues Teilstück nach dem Heraustrennen des zuvor dort vorhandenen, gegebenenfalls beschädigten oder verschlissenen Teilstücks in die untere Decklage einzugliedern.

Um sowohl das Heraustrennen des alten als auch das Einfügen des neuen Teilstücks so leicht wie möglich zu machen, ist das betreffende Teilstück erfindungsgemäß jeweils nur punktweise mit dem Träger verbunden. Besteht der Träger aus einem schweißbaren Material, können die punktförmigen Verbindungen insbesondere als Punktschweißungen ausgeführt sein. Alternativ ist es auch denkbar, für die Punktverbindungen form- und kraftschlüssig wirkende Durchsetzfügeverbindungen zu nutzen, wie sie sich beispielsweise durch Toxen oder Clinchen herstellen lassen.

Unabhängig davon, wie die Punktverbindungen ausgeführt werden, können sie im Reparaturfall leicht dadurch gelöst werden, dass sie mit Hilfe eines geeigneten Werkzeugs aus dem Material des jeweiligen Teilstücks herausgeschnitten werden. Dazu geeignet sind beispielsweise Kreisschneider, mit denen ein die jeweilige Punktverbindung umgebender Kreisausschnitt in das Material des Teilstücks geschnitten werden kann.

Anschließend kann das zu ersetzende Teilstück problemlos aus der unteren Decklage gelöst werden. Das neue Teilstück oder das wieder instandgesetzte alte Teilstück können dann wieder an den im Bodenelement verbliebenen Träger angesetzt und mit ihm wieder an einer ausreichenden Zahl von Verbindungsstellen punktförmig verbunden werden.

Mit der Erfindung steht somit ein Bodenelement zur Verfügung, bei dem es auf einfache Weise möglich ist, einzelne Teilstücke mit geringem Aufwand herauszutrennen und durch ein neues Teilstück zu ersetzen.

Der besondere Vorteil der Erfindung besteht dabei darin, dass sowohl das alte als auch das neue Teilstück integraler Bestandteil der unteren Decklage sind bzw. werden. Dies wirkt sich insbesondere dann günstig aus, wenn das Bodenelement auf seiner Unterseite jeweils in seiner Längsrichtung gesehen bis auf maximal einen Absatz sprungfrei ausgebildet ist. So können mit Hilfe des erfindungsgemäßen Trägers die jeweiligen Teilstücke problemlos so ausgerichtet werden, dass die Unterseite des Bodenelements vor und nach einer Reparatur in Längsrichtung betrachtet jeweils sprungfrei in einer Ebene verläuft.

Bei einem erfindungsgemäßen Bodenelement kann das jeweils für eine Reparatur in Frage kommende Teilstück bei der Erstmontage problemlos so in die untere Decklage integriert sein, dass sie zusätzlich zu ihrer Befestigung an dem Träger stoffschlüssig oder einstückig mit dem sie umgebenden Material der unteren Decklage verbunden sind. Diese Verbindung kann dann auf einfache Weise durch einen Trennschnitt gelöst werden. Erleichtert werden kann das Herausnehmen des jeweiligen Teilstücks jedoch dadurch, dass zwischen dem Material des Teilstücks und dem Material der dieses Teilstück umgebenden Abschnitten der unteren Decklage eine durchgehende Fuge ausgebildet ist. Eine solche Ausgestaltung bietet sich insbesondere in den Bereichen der unteren Decklage an, bei denen damit gerechnet werden muss, dass sie erhöhtem Verschleiß oder einem erhöhten Beschädigungsrisiko ausgesetzt sind.

Solch ein Teilstück der unteren Decklage ist beispielsweise die Scheuerplatte, die in der Regel eine größere Dicke als das sie umgebende Material der Scheuerplatte haben muss und den Königszapfen trägt, über den im praktischen Einsatz die Zugkraft übertragen wird, mit der der basierend auf dem Bodenelement aufgebaute Sattelauflieger vorwärts bewegt wird. Ein anderes Teilstück der unteren Decklage, bei dem ein erhöhtes Risiko für eine Beschädigung besteht, sind die in den Boden eingelassenen Mulden für Ösen, über die die der basierend auf dem Bodenelement aufgebaute Sattelauflieger beim Transport auf einer Fähre oder auf einem Schienenfahrzeug verzurrt werden kann.

Ist eine Fuge zwischen dem Teilstück und den das Teilstück umgebenden Abschnitten der unteren Decklage vorhanden, so ist diese Fuge zweckmäßigerweise mit einem Dichtstoff abgedichtet, um das Eindringen von Feuchtigkeit in das Bodenelement zu vermeiden.

Die Vorfertigung der einzelnen Bauteile eines erfindungsgemäßen Bodenelements kann dadurch vereinfacht werden, dass der in einem erfindungsgemäßen Bodenelement vorgesehene Träger mindestens zweiteilig ausgebildet ist, wobei das erste Trägerteil mit dem an das Teilstück angrenzenden Abschnitt der unteren Decklage fest verbunden ist, das andere Trägerteil mit dem Teilstück über die Punktverbindungen verbunden ist und die Trägerteile miteinander wiederum fest verbunden sind, um das Teilstück fest an den jeweils angrenzenden Abschnitt der unteren Decklage anzubinden. Auf diese Weise lässt sich das Teilstück der unteren Decklage, bei dem davon ausgegangen wird, dass es zukünftig einer Reparatur unterzogen werden muss, komplett mit dem einen Teil des Trägers vormontieren. An diesem Trägerteil wird das Teilstück in der erfindungsgemäßen Weise punktförmig befestigt. Getrennt davon lässt sich das zweite Trägerteil bereits an dem Abschnitt der übrigen unteren Decklage befestigen, der im fertig montierten Zustand an das betreffende Teilstück angrenzt. Die Art und Weise dieser Befestigung ist beliebig. Beim Einsetzen des vormontierten Teilstücks in das übrige Material der entsprechend vorbereiteten unteren Decklage müssen dann nur noch die Trägerteile miteinander verbunden werden. Deren Verbindung bleibt anschließend auch dann noch bestehen, wenn das Teilstück für die Reparatur aus der unteren Decklage herausgetrennt werden muss. Das dem herauszutrennenden Teilstück zugeordnete Trägerteil verbleibt also im Reparaturfall in dem Bodenelement und dient bei der anschließenden Montage des neuen Teilstücks als Anschlag, an den das neue Teilstück angeheftet wird. Für die Verbindung der Trägerteile untereinander können alle Verbindungsarten genutzt werden, bei denen bei ausreichend einfacher Herstellung eine dauerhaft feste Verbindung sichergestellt ist. Dazu bieten sich beispielsweise Bolz- oder Schraubverbindungen an. Auch ist es möglich, die Trägerteile miteinander zu verschweißen.

Wie bereits erwähnt, eignet sich die erfindungsgemäße Ausgestaltung insbesondere für solche Bodenelemente, bei denen jeweils in Längsrichtung des Bodenelements gesehen maximal ein einziger durch eine Dickenzunahme bedingter, in Richtung der Unterseite des Bodenelements gerichteter Absatz zwischen einer Zone größerer Dicke und einer Zone geringerer Dicke vorhanden ist, während jede weitere Dickenzunahme in Richtung des von den Decklagen begrenzten Raums stattfindet, so dass die untere Decklage auf ihrer Unterseite in Längsrichtung des Bodenelements gesehen bis auf höchstens einen Absatz in einer Ebene verläuft. Vorzugsweise findet dabei in Längsrichtung des Bodenelements gesehen jede Dickenzunahme zwischen den Zonen unterschiedlicher Dicke ausschließlich in Richtung des zwischen den Decklagen begrenzenden Raums statt, so dass die Unterseite des Bodenelements vollständig in einer Ebene verläuft.

Nachfolgend wird die Erfindung anhand einer Ausführungsbeispiele darstellenden Zeichnung näher erläutert. Es zeigen jeweils schematisch:

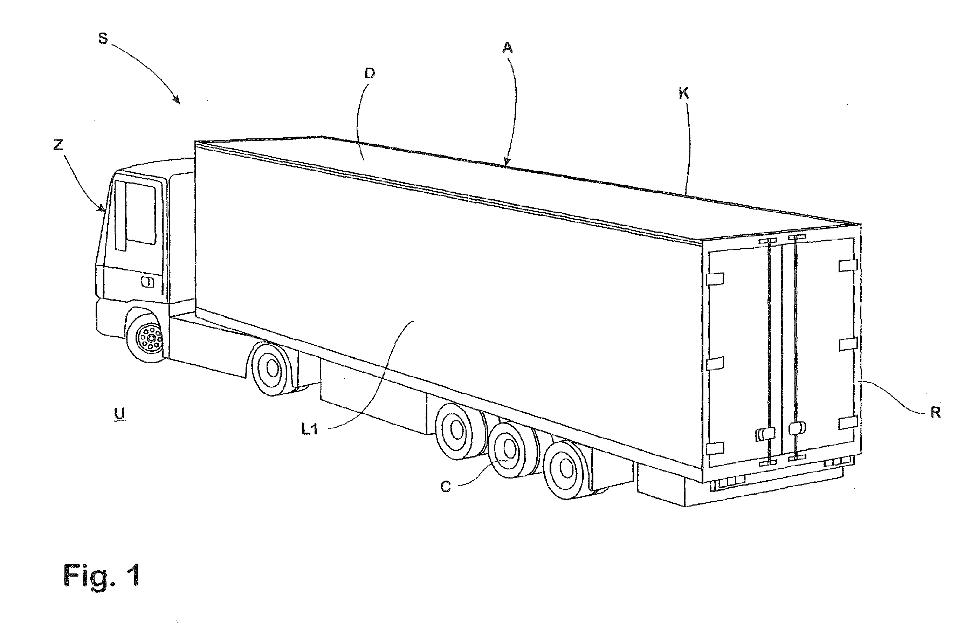

- Fig. 1: einen Sattelzug in einer perspektivischen Ansicht;

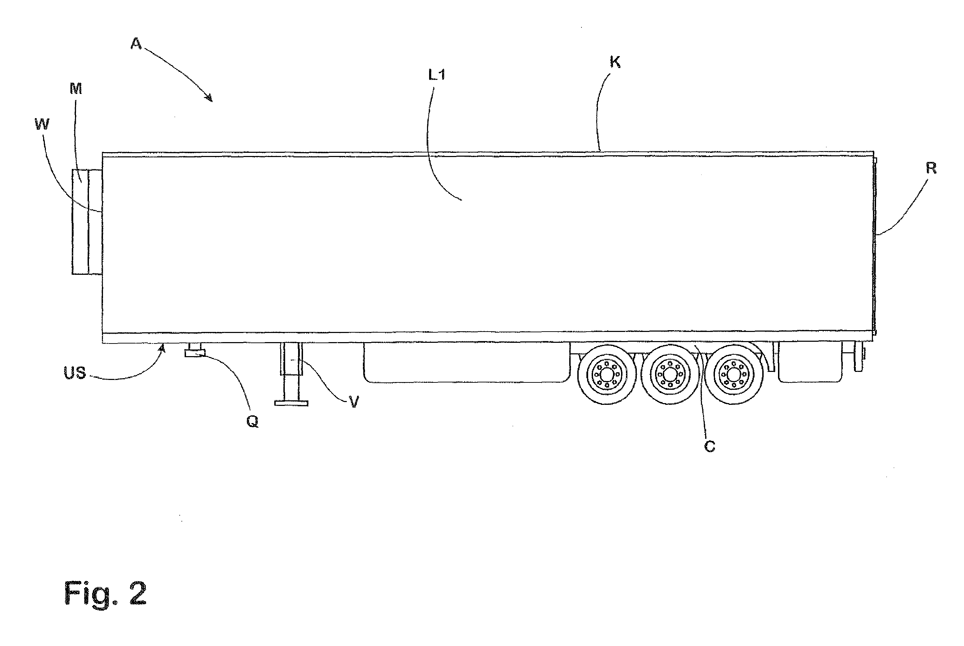

- Fig. 2: den Sattelauflieger des in Fig. 1 dargestellten Sattelzugs in einer seitlichen Ansicht;

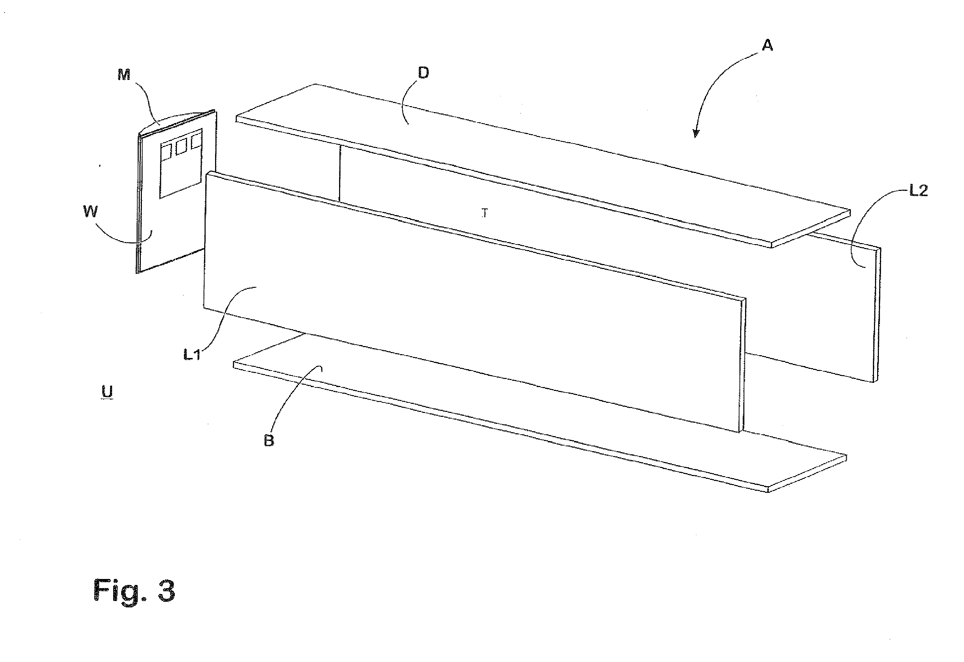

- Fig. 3: den Sattelauflieger in einer perspektivischen Explosionsansicht;
- Fig. 4: einen Ausschnitt eines in dem Auflieger gemäß Fig. 2 verbauten Bodenelements in einem Längsschnitt;
- Fig. 4a: einen weiteren Ausschnitt des in Fig. 2 gezeigten Bodenelements in einem Längsschnitt;
- Fig. 5: den Ausschnitt gemäß Fig. 4 in Draufsicht;
- Fig. 6a: den Ausschnitt gemäß Fig. 4 bei abgenommener oberer Decklage in teilgeschnittener Draufsicht;
- Fig. 6b: den Ausschnitt einer alternativen Ausgestaltung des Bodenelements bei abgenommener oberer Decklage in teilgeschnittener Draufsicht;
- Fig. 7 - 9: das Bodenelement in verschiedenen Stadien seiner Befüllung mit Schaum;
- Fig. 10: einen Querträger für das Bodenelement in seitlicher, teilweise aufgebrochener Ansicht;

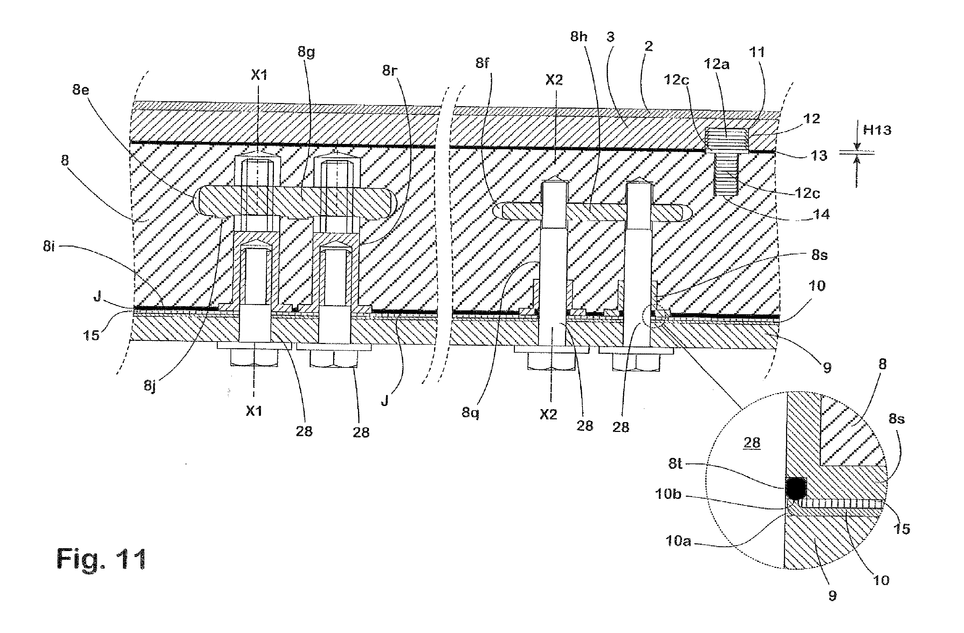

- Fig. 11: den Querträger gemäß Fig. 10 in einer ausschnittsweisen, längsgeschnittenen Ansicht;

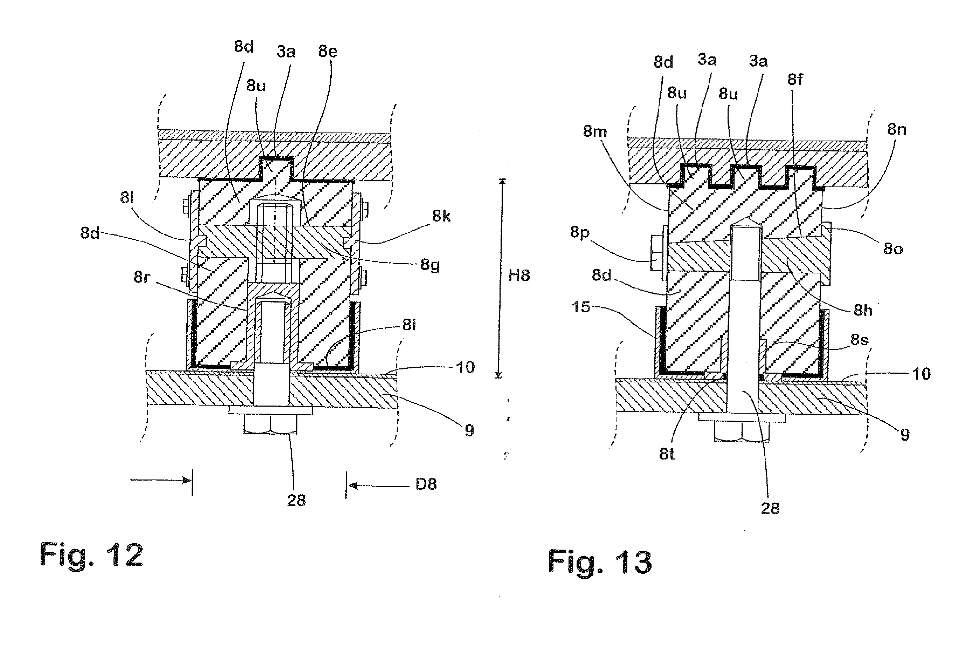

- Fig. 12: den Querträger gemäß Fig. 10 in einem Schnitt entlang der in Fig. 11 eingezeichneten Schnittlinie X1-X1;
- Fig. 13: den Querträger gemäß Fig. 10 in einem Schnitt entlang der in Fig. 11 eingezeichneten Schnittlinie X2-X2;
- Fig. 14: einen Quersteg bei der Montage auf der unteren Decklage des Bodenelements B;
- Fig. 15: den Quersteg gemäß Fig. 14 in fertig auf der der unteren Decklage des Bodenelements B montierter Stellung;
- Fig. 16: den Bereich des Anschlusses zwischen einem Bodenelement und einer Seitenwand des Sattelaufliegers in einem Schnitt quer zur Längsrichtung des Bodenelements;
- Fig. 16a: einen Ausschnitt N von Fig. 16 mit einem Detail des in Fig. 16 dargestellten Anschlusses in einer vergrößerten Darstellung;
- Fig. 16b,16c: jeweils eine alternative Ausgestaltung des in Fig. 16a gezeigten Details in einer zu Fig. 16a korrespondierenden vergrößerten Darstellung;
- Fig. 17: den Bereich des Anschlusses zwischen dem Bodenelement und der Seitenwand des Sattelaufliegers in einem Schnitt, der an einer anderen Stelle als der in Fig. 16 gezeigte Schnitt quer zur Längsrichtung des Bodenelements geführt ist;
- Fig. 18: den in Fig. 17 gezeigten Bereich des Anschlusses in einer frontalen, aus dem Innenraum auf diesen Bereich gerichteten Ansicht;
- Fig. 19: den Bereich eines alternativ ausgeführten Anschlusses zwischen dem Bodenelement und der Seitenwand des Sattelaufliegers in einem Schnitt, der an einer anderen Stelle als der in Fig. 16 gezeigte Schnitt quer zur Längsrichtung des Bodenelements geführt ist;
- Fig. 20: den Bereich einer weiteren Ausführung des Anschlusses zwischen dem Bodenelement und der Seitenwand des Sattelaufliegers in einem Schnitt, der an einer anderen Stelle als der in Fig. 16 gezeigte Schnitt quer zur Längsrichtung des Bodenelements geführt ist.

Beim hier beschriebenen Beispiel besteht der als Kühltransporter ausgelegte Sattelzug S in an sich bekannter Art aus einer Zugmaschine Z und einem Sattelauflieger A.

Der Sattelauflieger A umfasst einen Kofferaufbau K, der auf einem Fahrwerkschassis C montiert ist. Der Kofferaufbau K isoliert den von ihm umgebenen Innenraum I gegen die Wärme der Umgebung U. Dabei ist der Kofferaufbau K aus den Grundelementen "Bodenelement B", "Dach D", "Längsseitenwänden L1,L2", "Stirnwand W", die der Zugmaschine Z zugeordnet ist, und "Rückwand R" zusammengesetzt, die zur Stirnwand W gegenüberliegend angeordnet ist. An der Stirnwand W ist ein Kühlgerät M montiert, das den Innenraum I des Kofferaufbaus K kühlt. In der Rückwand R sind die Türen vorgesehen, über die das Be- und Entladen des Kofferaufbaus K erfolgt. Zum Abstützen des vom Zugfahrzeug Z abgekuppelten Sattelaufliegers A ist ein im vorderen Teil an der Unterseite US des Bodenelements B befestigtes Stützwindwerk V vorgesehen.

Die Längsseitenwände L1,L2 können in an sich bekannter Weise aus hier nicht dargestellten Einzelsegmenten zusammengesetzt sein, deren in Längsrichtung L des Kofferaufbaus K gemessene Länge jeweils einem Bruchteil der Gesamtlänge der Längsseitenwände L1,L2 entspricht, während ihre Höhe gleich der Höhe der Längsseitenwände L1,L2 ist. Wenn nachfolgend von Längsseitenwänden L1,L2 die Rede ist, gelten die betreffenden Erläuterungen für einstückig ausgebildete Längsseitenwände genauso wie für aus Einzelsegmenten zusammengesetzte.

Das Bodenelement B weist eine obere Decklage 1 auf, die durch eine obere, dem Innenraum I des Kofferaufbaus K zugeordnete Deckschicht 2 und einer die Deckschicht 2 tragenden Tragschicht 3 gebildet ist.

Die Deckschicht 2 ist aus separat vorgefertigten Formteilen 4,4a zusammengesetzt, die als Flachprofile vorgefertigt sind. In die Formteile 4,4a können Formelemente, wie Nutschienen 4b, hier nicht gezeigte Gewindeöffnungen oder vergleichbare Elemente zum Befestigen und Anschlagen von Zurr- oder anderen Befestigungsmitteln eingearbeitet sein. Diese sind dabei bevorzugt so ausgebildet, dass die Ladefläche F im Wesentlichen eben und frei von über sie hinausstehenden Vorsprüngen ausgebildet ist. Die Formteile 4,4a erstrecken sich in Längsrichtung L des Bodenelements B über dessen gesamte Länge und nehmen jeweils einen Bruchteil seiner Breite b ein.

An ihren Längsrändern sind die Formteile 4,4a mit dem jeweils benachbart angeordneten Formteil 4,4a verschweißt. Die Verschweißungen 5 der Formteile 4,4a sind beispielsweise als Reibrührschweißung ausgeführt. Dieses Schweißverfahren erlaubt es auf besonders kostengünstige und effektive Weise, die mit ihren Längsrändern stumpf aneinander liegenden flachen Aluminium-Formteile 4,4a über die gesamte Länge des Bodenelements unter weitestgehender Vermeidung von erwärmungsbedingten Verformungen der miteinander zu verbindenden Formteile 4,4a miteinander zu verbinden. Indem dabei die Reibrührschweißungen 5 von der der Tragschicht 3 der Decklage 1 zugeordneten Seite der Deckschicht 2 her durchgeführt wird, die Wurzelseite der Reibrührschweißungen 5 also der Ladefläche F zugeordnet sind, können die vom Innenraum I her sichtbaren Schweißzonen 5 weitestgehend glatt ausgeführt werden.

Alternativ zu einem Aluminiumwerkstoff können die Formteilen 4,4a auch aus einem Stahlblech gefertigt sein. Die einzelnen Formteile 4,4a können dazu beispielsweise durch Rollformen, Walzen oder ein anderes kosteneffektives Verfahren aus entsprechend geformten Blechzuschnitten geformt werden.

Auf ihrer freien Oberseite sind die Formteile 4,4a mit einer regelmäßigen Profilierung 6 versehen. Diese verhindert, dass Personen ausrutschen, die die durch die freie Oberfläche der Deckschicht 2 gebildete Ladefläche F des Bodenelements B beispielsweise zum Be- und Entladen der in dem Sattelauflieger A jeweils zu transportierenden Last T begehen.

Im Fall, dass die Formteile 4,4a aus einem Aluminiumwerkstoff beispielsweise durch Extrusion erzeugt worden sind, kann das Profil in Form von sich in Längsrichtung der Formteile erstreckenden Rillen unmittelbar in die die Ladefläche F bildende Oberfläche der Formteile 4,4a eingeformt werden. Quer zur Längsrichtung L der Formteile 4,4a sich erstreckende Rillen können mittels geeigneter Werkzeuge bei einer Warmformgebung in die betreffende Oberfläche eingeformt werden. Alternativ können diese Rillen auch durch geeignete Spanabhebende Verfahren, beispielsweise Sägen oder Stoßen, in die Oberfläche der Formteile eingeschnitten werden.

Im Fall, dass die Formteile 4,4a aus Stahlblechen geformt sind, kann an den Formteilen 4,4a ebenfalls auf einfache Weise ein Profil in Form von sich über die Länge der Formteile 4,4a oder quer dazu ausgerichteten Rillen gebildet werden. Im Querschnitt gesehen weisen die Formteile dabei bevorzugt einen Querschnitt auf, bei dem die Grundfläche der Rillen jeweils ebenso rechtwinklig zu den an die Grundfläche angrenzenden Seitenflächen ausgerichtet sind wie die das zu transportierende Gut unmittelbar abstützenden Aufstandfläche zu diesen Seitenflächen. Die Tiefe der Rillen ist dabei optimalerweise so ausgelegt, dass auch bei voll beladener Ladefläche F ausreichende Luftmengen durch Rillen zirkulieren können, um beispielsweise dort sich ansammelnde Feuchtigkeit sicher zu entfernen.

Die aus den Formteilen 4,4a zusammengesetzte Deckschicht 2 ist vollflächig mit der aus einem Holzwerkstoff bestehenden Tragschicht 3 der oberen Decklage 1 verklebt. Die Dicke D3 der Tragschicht ist dabei um ein Vielfaches größer als die Dicke der Deckschicht 2. Der wesentliche Beitrag zur Tragfähigkeit der oberen Deckschicht 2 wird dementsprechend von der Tragschicht 3 übernommen.

Die Tragschicht 3 ist auf Querstegen 7,7a,7b,8 abgestützt. Die Querstege 7,7a,7b,8 sind jeweils aus einem Holzwerkstoff hergestellt. Sie weisen eine quaderförmige, langgestreckte Grundform auf und erstrecken sich quer zur Längsrichtung L ausgerichtet über die Breite b des Bodenelements B. Ihre Dicke liegt typischerweise im Bereich von 9 - 15 mm.

An den Stellen, an denen Anbauteile, wie beispielsweise die Längsträger 9 des Fahrwerkchassis C oder der Träger des Stützwindwerks V, an der Unterseite US des Bodenelements B befestigt werden, sind die Querstege als Querträger 8 ausgebildet.

An ihrer der oberen Decklage 1 zugeordneten ebenen Oberseite sind die Querstege 7,7a,7b und Querträger 8 mit der ihnen zugewandten Unterseite der Tragschicht 3 der oberen Decklage 1 jeweils verklebt.

Zur lagesicheren Positionierung der Querstege 7,7a,7b und Querträger 8 an der oberen Decklage 1 sind in die Tragschicht 3 von deren Unterseite her Dübelöffnungen 11 eingeformt, in denen Dübel 12 mit ihrem oberen Dübelabschnitt 12a sitzen. Die Dübel 12 stehen dabei mit einem Absatz 12b über die Unterseite der oberen Decklage 1 hinaus. Durch die Höhe des Absatzes 12b ist die Höhe H13 eines Klebespalts 13 definiert, der die zum Verkleben der Querstege 7,7a,7b,8 jeweils benötigte Klebstoffmenge aufnimmt. An den Absatz 12b ist ein unterer Dübelabschnitt 12c angeformt, der koaxial zum Dübelabschnitt 12a ausgerichtet ist, jedoch einen kleineren Durchmesser als der Dübelabschnitt 12a hat.

Jedem Quersteg 7 bzw. Querträger 8 sind mindestens zwei Dübel 12 zugeordnet. In die Oberseite der Querstege 7 und Querträger 8 sind an entsprechender Stelle korrespondierende Öffnungen 14 eingeformt, in die der jeweilige untere Dübelabschnitt 12c des zugeordneten Dübels 12 greift. Die Dübel 12 weisen an ihren Dübelabschnitten 12a,12b jeweils Rastvorsprünge 13 auf, die mit den rauen Wandungen der jeweiligen Dübelöffnung 11,14 unlösbar verrasten.

Um sicherzustellen, dass die Klebverbindung zwischen den Querstegen 7,7a,7b oder den Querträgern 8 und der Tragschicht 3 auch Schubbelastungen standhält, die aus ungünstiger Richtung wirken, sind die Querstege 7,7a,7b und Querträger 8 jeweils jeweils zusätzlich formschlüssig mit der Tragschicht 3 verkoppelt. Dazu sind in die Unterseite der Tragschicht 3 der oberen Decklage 1 Einsenkungen 3a in Form von Nuten eingefräst, die quer zur Längsrichtung L des Bodenelements B verlaufen. An den Querstegen 7,7a,7b sind korrespondierend geformte stegartige Vorsprünge 8u ausgebildet, die von der der Tragschicht 3 zugeordneten Oberseite der Querstege 7,7a,7b und Querträger 8 formschlüssig in die Einsenkungen 3a greifen. Abhängig von den im praktischen Betrieb auftretenden Belastungen können jedem Quersteg 7,7a,7b oder Querträger 8 eine oder mehrere Einsenkungen 3a zugeordnet sein, in die der jeweilige Quersteg 7,7a,7b oder Querträger 8 mit einer entsprechenden Zahl von Vorsprüngen greift.

Der Abstand a1,a2,a3 der Querstege 7,7a,7b und der Querträger 8 zueinander variiert entsprechend der Belastungen, die im praktischen Einsatz auf das Bodenelement B wirken. Dementsprechend sind in einem Einfahrbereich G der Ladefläche F, der der Rückwand R zugeordnet ist und beim Be- und Entladen von einem hier nicht gezeigten Staplerfahrzeug befahren wird, die Querstege 7a in einem kleineren Abstand a1 angeordnet als die außerhalb des Einfahrbereichs G angeordneten Querstege 7 oder Querträger 8, die in einem größeren Abstand a2 aufgestellt sind. In entsprechender Weise sind die Querstege 7b oder die Querträger 8 in dem Bereich des Bodenelements B, in dem eine im praktischen Betrieb auf dem Zugfahrzeug Z aufliegende Scheuerplatte 14 in der unteren Decklage 10 des Bodenelements B ausgebildet ist, erforderlichenfalls in einem verminderten Abstand a3 positioniert, um die dort auftretenden Belastungen sicher aufnehmen zu können. Der Abstand a1 der Querstege 7a im Einfahrbereich G beträgt typischerweise 50 -100 mm, insbesondere 60 - 80 mm, während der Abstand a2 der Querstege 7 in den normal belasteten Bereichen typischerweise bei 100 - 180 mm, insbesondere bei 120 - 160 mm, und der Abstand a3 der Querstege 7b und Querträger 8 im Bereich der Scheuerplatte 14 beispielsweise bei 80 - 140 mm, insbesondere 100 - 120 mm, liegt.

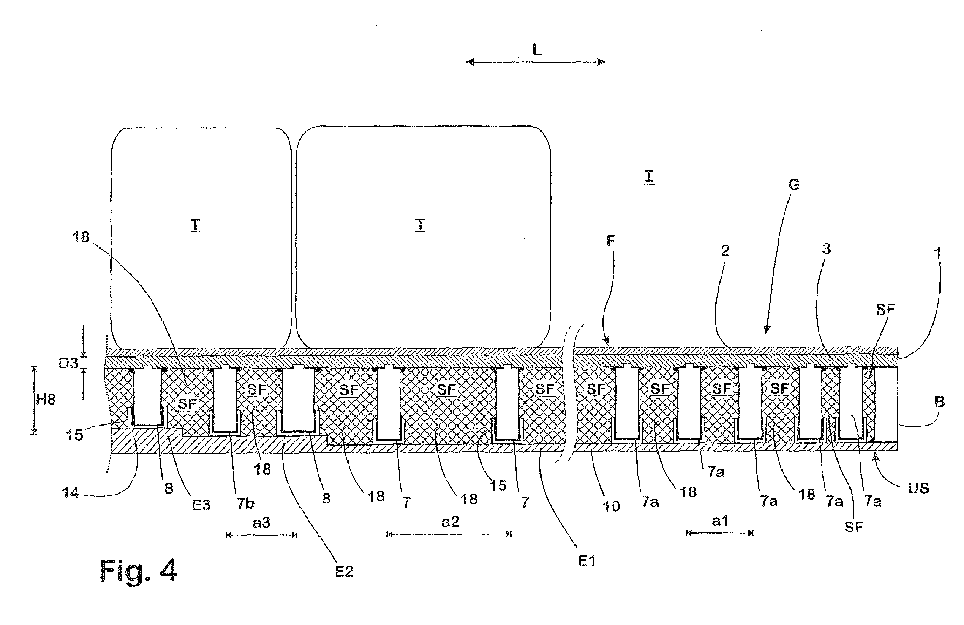

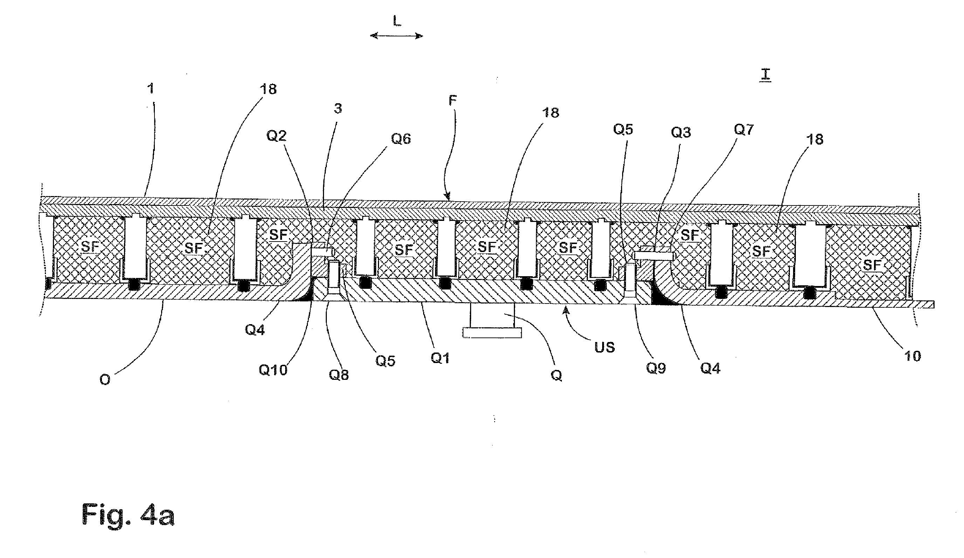

Die untere Decklage 10 des Bodenelements B ist aus Stahlblech hergestellt. In den in Fig. 4 allgemein mit "E1" bezeichneten Bereichen, die im praktischen Einsatz keinen besonderen Belastungen unterliegen, beträgt die Dicke des Stahlblechs 0,6 - 0,8 mm, wogegen die untere Decklage 10 in den in Fig. 4 allgemein mit "E2" und "E3" bezeichneten Bereichen, die im praktischen Einsatz höher belastet sind, Dicken von 2 - 4 mm oder 6 - 8 mm aufweist.

Als Stahlblechmaterial für die untere Decklage 10 kommen aus dem Bereich der Automobilkarasseriefertigung bekannte Stahlbleche in Frage, die eine hohe Festigkeit bei ausreichender Korrosionsbeständigkeit besitzen. Solche Bleche sind üblicherweise mit einer metallischen Korrosionsschutzschicht versehen, wie beispielsweise einer Feuerverzinkung oder Feueraluminierung. Darüber hinaus können sie zur weiteren Verbesserung ihres Korrosionsschutzes mit einem organischen Überzug versehen sein. Solches Stahlmaterial steht in der Praxis als so genanntes "Coil-Coating-Material" zur Verfügung.

Die Dickenzunahme der unteren Decklage 10 erfolgt jeweils in Richtung des zwischen der oberen und unteren Decklage 1,10 begrenzten Raums, so dass an der Unterseite US des Bodenelements B in Längsrichtung L betrachtet bis auf höchstens einen einzigen Absatz eben ausgebildet ist. Bei der Herstellung des Bodenelements kann so eine einfach gestaltete Presse eingesetzt werden, deren Pressflächen eben ausgebildet sind und bei der keine besonderen Vorkehrungen für den Ausgleich von Längentoleranzen des Bodenelements B erforderlich sind. Optimal ist, wenn die Unterseite in Längs-und Querrichtung im Wesentlichen vollständig glatt in einer Ebene verläuft.

Die Höhe H8 der Querstege 7,7a,7b und Querträger 8 in den Bereichen E2,E3, in denen die untere Decklage 10 eine größere Dicke aufweist, ist entsprechend gegenüber der Höhe H8 der in den weniger stark belasteten Bereichen E1 des Bodenelements B angeordneten Querstegen 7,7a,7b und Querträgern 8 reduziert, so dass die Ladefläche F über die gesamte Länge des Bodenelements B in einer Horizontalebene verläuft.

Um die unterschiedlich dicken Bereiche der unteren Decklage 10 zu verwirklichen, ist die untere Decklage 10 aus unterschiedlich dicken, miteinander fest verbundenen Blechteilen zusammengesetzt. Bei diesen kann es sich beispielsweise um nach Art von Tailored-Blanks vorgefertigte Stahlbleche handeln, bei denen Stahlzuschnitte unterschiedlicher Festigkeit und Dicke miteinander kombiniert werden. Auch ist es denkbar, mit einem ausreichend flexiblen Walzverfahren die erforderlichen Dickenunterschiede in die das Stahlmaterial der unteren Decklage 10 einzuwalzen.

Auf diese Weise ist (s. Fig. 4a) in den vorderen, der Zugmaschine Z zugeordneten Abschnitt der unteren Decklage 10 eine Gleitplatte O ausgebildet, die sich ausgehend vom stirnseitigen Ende des Bodenelements B in Richtung der Rückwand R bis hinter den Königszapfen Q erstreckt, über den im Fahrbetrieb die Antriebskräfte auf den Sattelauflieger A übertragen werden. Die Gleitplatte O weist eine typische Dicke von 4 mm auf.

Der Königszapfen Q wird dabei von einer in Draufsicht quadratischen Scheuerplatte Q1 getragen, die in einen entsprechend geformten Ausschnitt der Gleitplatte O so eingesetzt ist, dass auch ihre der Unterseite US zugeordnete Oberfläche genauso wie die entsprechende Oberfläche der Gleitplatte O flächenbündig zur Unterseite US des Bodenelements B ausgerichtet ist. Die Scheuerplatte Q1 weist dabei eine typische Dicke von 8 mm auf.

Die Scheuerplatte Q1 ist an Trägern Q2,Q3 befestigt, die durch jeweils zwei im Querschnitt L-förmige Trägerteile Q4,Q5 gebildet sind. Das eine Trägerteil Q4 ist dabei mit seinem einen Schenkel mit der dem zwischen den Decklagen 1,10 begrenzten Raum zugeordneten Oberseite der Gleitplatte O verschweißt. Gleichzeitig ist das Trägerteil Q4 so positioniert, dass sein anderer Schenkel mit seiner senkrecht zu der Oberseite der Gleitplatte O ausgerichteten Stirnfläche an der Kante steht, die die Öffnung begrenzt, in die die Scheuerplatte Q1 eingesetzt ist.

Das jeweilige zweite Trägerteil Q5 der Träger Q2,Q3 sitzt mit seinem einen Schenkel auf der Oberseite der Scheuerplatte Q1 und ist so ausgerichtet, dass die senkrecht zu der Scheuerplatte Q1 ausgerichtete Stirnseite des anderen Schenkels dicht an der Stirnseite des anderen Trägerteils Q5 anliegt.

Untereinander sind die jeweiligen Trägerteile Q4,Q5 der Träger Q2,Q3 miteinander fest und unlösbar verbunden. Dazu können beispielsweise Bolzverbindungen Q6,Q7 vorgesehen sein. Alternativ können die Trägerteile Q2Q3 auch miteinander verschraubt oder verschweißt sein. Durch die Teilung der Träger Q2,Q3 in jeweils zwei Trägerteile Q4,Q5 ist es möglich, die Scheuerplatte Q1 mit den ihr zugeordneten Trägerteilen Q5 getrennt von dem restlichen Bodenelement B vorzumontieren.

Bei dieser Vormontage wird die Scheuerplatte Q1 durch Punktschweißungen Q8,Q9 an das jeweilige Trägerteil Q5 angeheftet. Die zwischen der Scheuerplatte Q1 und der sie umgebenden Gleitplatte O verbleibende umlaufende Fuge Q10 kann durch einen Dichtstoff abgedichtet sein, um das Eindringen von Feuchtigkeit in das Innere des Bodenelements B zu verhindern.

Im Fall, dass die Scheuerplatte Q1 aufgrund von Verschleiß oder Beschädigung aus dem Bodenelement B herausgetrennt werden muss, können die Punktschweißungen Q8,Q9 aus der Scheuerplatte Q1 herausgebohrt oder geschnitten werden. Die Scheuerplatte Q1 kann dann problemlos aus dem Bodenelement B herausgenommen werden, wobei die ihr ursprünglich zugeordneten Trägerteile Q5 in dem Bodenelement B verbleiben.

Ihre nun freie der Unterseite US des Bodenelements B jeweils zugeordnete Fläche bildet anschließend eine Anlagefläche, an der die neue oder instandgesetzte wieder durch entsprechende Punktschweißungen angeheftet wird. Alternativ zu der besonders kostengünstig herstellbaren Punktverschweißung können selbstverständlich auch andere Verbindungen zum Anbinden der Scheuerplatte Q1 an die Trägerteile Q5 verwendet werden, die eine punktweise Befestigung erlauben.

Zur Sicherung des Halts der Querstege 7,7a,7b und Querträger 8 auf der unteren Decklage 10 sind dort Anschläge 15 in Form von im Querschnitt U-förmigen Aufnahmen vorgesehen. Die Anschläge 15 können als separate Blechteile vorgefertigt sein, die an der dafür vorgesehenen Stelle an der unteren Decklage 10 beispielsweise durch Punktschweißen befestigt werden. Alternativ ist es auch denkbar, die Anschläge 15 direkt aus dem Blech der unteren Decklage 10 zu formen.

Die lichte Weite der U-förmigen Anschläge 15 ist so bemessen, dass zwischen den in den Anschlägen 15 sitzenden Querstegen 7,7a,7b bzw. Querträgern 8 und den frei von der unteren Decklage 10 abstehenden Schenkeln 15a,15b der Anschläge 15 ausreichend Raum vorhanden ist, um den Klebstoff J aufzunehmen, mit dem die Querstege 7,7a,7b und Querträger 8 in den Anschlägen 15 mit der unteren Decklage 10 verklebt sind.

Um eine gleichmäßige Verteilung des vor dem Einsetzen der Querstege 7,7,a,7b und Querträger 8 in die Anschläge 15 eingefüllten Klebstoffs J zu sichern, kann an der der unteren Decklage 10 zugeordneten Unterseite der Querstege 7,7a,7b und Querträger 8 ein Abteilelement 16 vorgesehen sein, das sich entlang der Mittellinie über die gesamte Unterseite erstreckt und beim Einsetzen der Querstege 7,7a,7b bzw. Querträger 8 in die Anschläge 15 den dort bereits vorhandenen Klebstoff J in zwei im Wesentlichen gleiche Hälften teilt. Auf diese Weise wird der Klebstoff J gezwungen, zu gleichen Teilen in den zwischen dem einen Schenkel 15a und den zwischen anderem Schenkel 15b und dem jeweiligen Quersteg 7,7a,7b bzw. Querträger 8 vorhandenen Freiraum aufzusteigen. Im Ergebnis wird so eine vollflächige Verklebung der Querstege 7,7a,7b und Querträger 8 in den Anschlägen 15 sichergestellt.

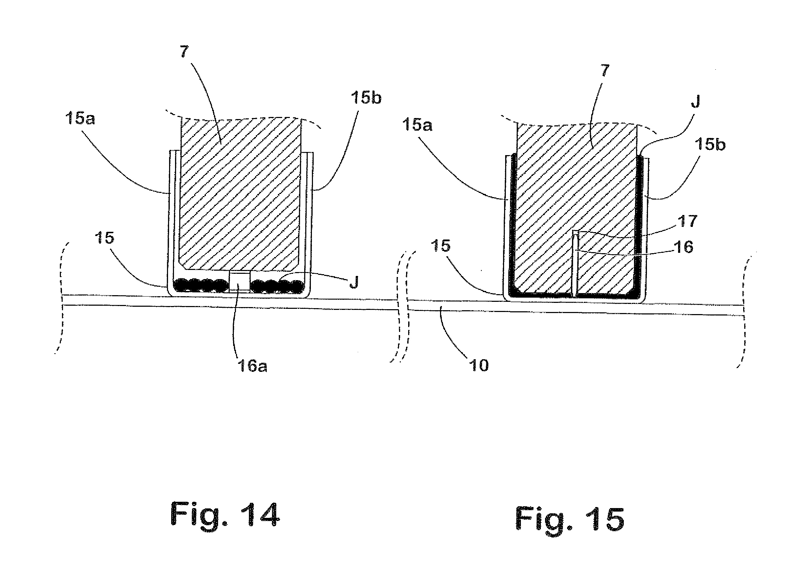

Beim in Fig. 15 dargestellten Ausführungsbeispiel ist das Abteilelement 16 in Form einer Lamelle verwirklicht, die in einem in die Querstege 7,7a,7b und Querträger 8 eingeformten Schlitz 17 sitzt. Dessen Breite ist so bemessen, dass das im zur Montage bereiten Zustand über den Schlitz 17 hinaus stehende Abteilelement 16 mit leichter Pressung in dem Schlitz 17 gehalten ist. Gleichzeitig ist die Tiefe des Schlitzes 17 so eingestellt, dass das Abteilelement 16 bei vollständig in dem Anschlag sitzendem Quersteg 7,7a,7b bzw. Querträger 8 über seine ganze Höhe in den Schlitz 17 eingeschoben ist.

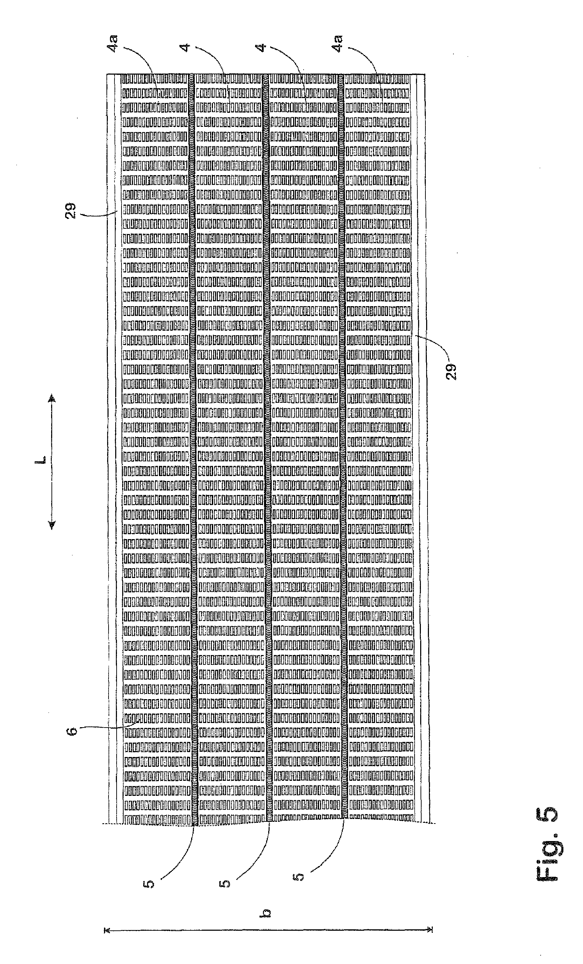

Alternativ zur Verwendung des in Fig. 5 gezeigten lammellenartigen Abteilelements 16 ist es auch möglich, als Abteilelement 16a ein elastisches Teil, wie eine Lippendichtung oder ein Schaumstoffelement, zu verwenden, das sich beim Einführen des jeweiligen Querstegs 7,7a,7b bzw. Querträgers 8 in den ihm zugeordneten Anschlag 15 zusammendrücken lässt. Dazu kann als Abteilelement 16a beispielsweise ein handelsübliches Schaumstoff-Dichtungsband verwendet werden, das an seiner Ober- und Unterseite mit einem Klebfilm belegt ist. Mit der einen Seite kann ein solches Abteilelement 16a an den jeweiligen Quersteg 7,7a,7b bzw. Querträger 8 angeklebt werden. Mit seiner anderen Seite verklebt das Abteilelement 16a beim Aufsetzen des jeweiligen Querstegs 7a,7b,7 bzw. Querträger 8 selbsttätig mit der unteren Decklage 10 und erzwingt so besonders effektiv, dass der Klebstoff J sich in der gewünschten Weise in der Aufnahme 15 ausbreitet (Fig. 14).

Die Querstege 7 und Querträger 8 teilen den zwischen der oberen Decklage 1 und der unteren Decklage 10 begrenzten Raum in Kammern 18, die sich über die Breite b des Bodenelements B erstrecken und seitlich jeweils durch einen der Querstege 7,7a,7b bzw. Querträger 8 begrenzt sind.

Die Kammern 18 sind vollständig mit einer Schaumfüllung SF gefüllt, die aus handelsüblichem Polyurethanschaum gebildet ist. Dieser ist so ausgelegt, dass er allenfalls einen untergeordneten Beitrag zur Tragfähigkeit des Bodenelements B leistet.

Optimalerweise wirkt die Schaumfüllung SF der Kammern 18 im Wesentlichen ausschließlich wärmeisolierend, so dass die auf der Ladefläche F lastenden Lasten im Wesentlichen ausschließlich über die Querstege 7,7a,7b und Querträger 8 auf die untere Decklage 10 übertragen werden. Dazu weist der in die Kammern 18 gefüllte Schaum bevorzugt eine Rohdichte von 40 - 45 kg/m³ auf.

In besonders hoch belasteten Zonen oder im Hinblick auf eine gegebenenfalls gewünschte Reduzierung der Anzahl von Querstegen 7,7a,7b kann es jedoch auch zweckmäßig sein, den die Schaumfüllung SF bildenden Schaum so auszulegen, dass er einen Teil der auf der oberen Decklage 1 lastenden Last mitträgt. Dazu kann PU-Schaum mit einer Rohdichte von bis zu 55 kg/m³ verwendet werden.

Denkbar ist es auch, bestimmte Kammern 18, bei denen die Tragfähigkeit der Schaumfüllung SF im Vordergrund steht, mit einem Schaum höherer Tragfähigkeit zu füllen, während andere Kammern 18 mit einem Schaum gefüllt werden, der eine im Wesentlichen ausschließlich wärmeisolierend wirkende, nicht tragende Schaumfüllung SF bildet.

Um eine gleichmäßige Füllung der Kammern 18 sicherzustellen, ist in die Querstege 7,7a,7b und Querträger 8 jeweils mindestens eine Ausnehmung 7c,8a eingeformt, über die es beim Befüllen der Kammern 18 mit dem dann noch flüssigen Schaum zu einem Volumenausgleich zwischen den Kammern 18 kommen kann. Bevorzugt ist die jeweilige Ausnehmung 7c,8a dazu an demjenigen Ende der Querstege 7,7a,7b bzw. Querträger 8 angeordnet, der der Längsseite des Bodenelements B zugeordnet ist, an der die Befüllung der Kammern 18 mit Schaum erfolgt.

Die beiden oberen Eckbereiche 8b, an denen die der oberen Decklage 1 zugeordnete Oberseite in die jeweilige Schmalseite der Querstege 7,7a,7b bzw. Querträger 8 übergeht, sind jeweils so abgeschrägt, dass die gedachten Verlängerungen der dort gebildeten Schrägflächen 8c spitzdachförmig aufeinander zulaufen.

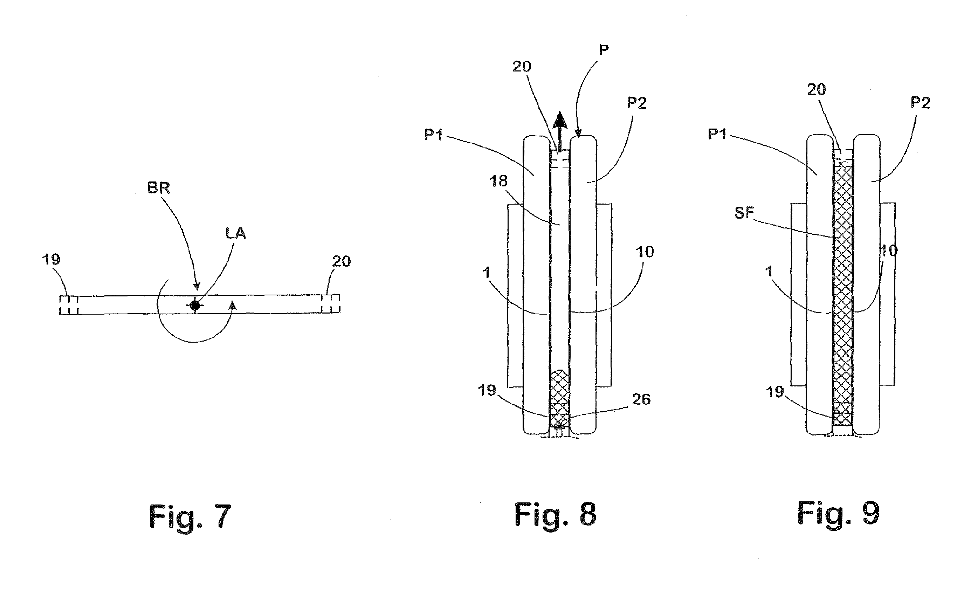

Die Ausnehmung 8a, Eckbereiche 8b und Schrägflächen 8c sind in Fig. 9 exemplarisch für einen Querträger 8 dargestellt, finden sich aber genauso bei den Querstegen 7,7a,7b.

Die Querträger 8 weisen einen Grundkörper 8d auf, der wie die Querstege 7,7a,7b aus Holzwerkstoff hergestellt ist. Der Grundkörper 8d weist bei gleicher Höhe H8 und Breite B8 wie die einfachen Querstege 7,7a,7b eine größere Dicke D8 auf. Auf diese Weise können die Querträger 8 die auf ihnen im praktischen Betrieb wirkenden Lasten sicher aufnehmen.

Alternativ zur Verwendung eines Holzwerkstoffs können die Querstege 7,7a,7b und der Grundkörper der Querträger 8 auch aus einem anderen Werkstoff, wie beispielsweise Kunststoff, hergestellt sein. Dies kann einerseits aus Kostengründen oder Gründen der Verfügbarkeit der benötigten Holzwerkstoffe angezeigt sein. Andererseits kann durch die Wahl alternativer Werkstoffe für die Querstege 7 und Querträger 8 auch die Gefahr der Entstehung von Wärmebrücken im Bereich der Querträger 7 und Querträger 8 vermindert werden. Zu diesem Zweck denkbar ist es auch, einen Holzwerkstoff mit einem stark wärmeisolierenden Werkstoff zu kombinieren oder die Querstege 7,7a,7b oder Querträger 8 aus einem faserverstärkten Mischwerkstoff zu fertigen.

In den Grundkörper 8d der Querträger 8 sind an den Stellen, an denen der jeweilige Querträger 8 beispielsweise mit den Längsträgern 9 des Fahrwerkschassis C verschraubt ist, Ausnehmungen 8e,8f eingeformt. Die Ausnehmungen 8e,8f sind dabei jeweils als Durchgangsöffnungen ausgebildet, die vollständig vom Material des Grundkörpers 8d umgeben sind und eine langgestreckte Form aufweisen.

In den Ausnehmungen 8e,8f sitzt jeweils formschlüssig ein Anschlusselement 8g,8h. Das Anschlusselement 8g besitzt eine an die langgestreckte Form der ihm zugeordneten Ausnehmung 8e angepasste plattenförmige Grundform. An seiner der Aufstandfläche 8i, mit der der jeweilige Querträger 8 auf der unteren Decklage 10 steht, zugeordneten Unterseite sind in regelmäßigen Abständen beabstandet zueinander angeordnete Vorsprünge 8j ausgebildet, mit denen das Anschlusselement 8g formschlüssig in korrespondierend geformte Einsenkungen der sich parallel zur Aufstandfläche 8i erstreckenden Grundfläche der Ausnehmung 8e greift.

Gegen ein seitliches Verschieben aus der Ausnehmung 8e hinaus ist das Anschlusselement 8g zusätzlich durch zwei plattenförmige Sicherungselemente 8k,81 gesichert, die an den Seitenflächen 8m,8n des Querträgers 8 anliegen und mit dem Anschlusselement 8g fest verschraubt sind.

Das Anschlusselement 8h weist ebenfalls eine langgestreckte, im Querschnitt jedoch keilförmige Form auf, wobei seine der Aufstandfläche 8i zugeordnete Unterseite parallel zur Aufstandfläche 8i verläuft, während seine Oberseite schräg zur Aufstandfläche 8i ausgerichtet ist. Dementsprechend ist auch die diesem Anschlusselement 8h zugeordnete Ausnehmung 8f im Querschnitt keilförmig geformt, so dass das Anschlusselement 8h formschlüssig in der Ausnehmung 8f sitzt. Gegen ein seitliches Verschieben aus der Ausnehmung 8f hinaus ist das Anschlusselement 8h zum einen durch einen einstückig an ihn angeformten Absatz 8o geschützt, der an der ihm zugeordneten Seitenfläche 8n des Grundkörpers 8d anliegt. Zum anderen ist auf der dem Absatz 8o gegenüberliegenden dünneren Seite eine Schraube 8p in das Anschlusselement 8h geschraubt, die mit ihrem Schraubenkopf an der ihr zugeordneten Seitenfläche 8m des Grundkörpers 8d anliegt.

In die Anschlusselemente 8g,8h sind jeweils mit Abstand zueinander zwei Gewindebohrungen eingeformt. In diese ist jeweils eine Schraube 28 geschraubt, mit dem der jeweilige Längsträger 9 an dem Bodenelement B befestigt ist.

Die Schrauben 28 sind dabei jeweils durch eine Öffnung 8q geführt, die von der Aufstandfläche 8i ausgehend in den Grundkörper 8d eingeformt sind. In den Öffnungen 8q sitzt jeweils eine Hülse 8r,8s, die aus Stahl hergestellt ist. Die Hülsen 8s,8r erstrecken sich im fertig montierten Zustand jeweils über etwa die Hälfte der Länge der Öffnung 8q.

Im Bereich des der Aufstandfläche 8i zugeordneten Endes der Öffnung der Hülsen 8r,8s ist jeweils eine O-Ringdichtung 8t eingesetzt, die das Eindringen von Feuchtigkeit in die Hülsenöffnung verhindert.

Die O-Ringdichtung 8t ist dabei derart positioniert, dass der in Richtung des Inneren des Bodenelements eingezogene Rand der für die jeweilige Schraube 28 eingestanzten Öffnung 10a der unteren Decklage 10 an der O-Ringdichtung 8t anliegt. Auf diese Weise ist die offene, nicht mehr durch die Korrosionsschutzschicht der unteren Decklage geschützte Schnittkante 10b der Öffnung 10a gegen einen Kontakt mit der Feuchtigkeit der Umgebung geschützt.

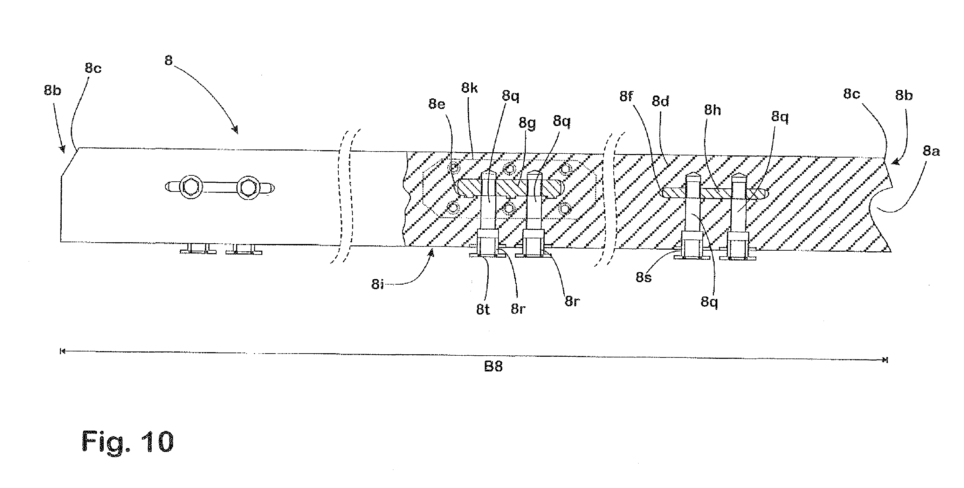

Während des Verklebens des jeweiligen Quersteges 7,7a,7b oder Querträgers 8 besteht eine dritte Funktion der O-Ringdichtung 8t darin, die Hülsenöffnung gegen das Eindringen von Kleber J zu schützen. Aus diesem Grund werden die Hülsen 8r,8s, wie in Fig. 10 gezeigt, vor dem Verkleben in den Querstegen 7,7a,7b und Querträgern 8 jeweils so vormontiert, dass sie nur über einen Teil ihrer Länge in die Öffnung 8q eingeschoben sind und mit ihrem Kragen sowie ihrer darin sitzenden O-Ringdichtung 8t mit einem Abstand vor der Aufstandfläche 8i stehen. Auf diese Weise setzen die Kragen der Hülsen 8r,8s mit den O-Ringdichtungen 8t auf der Grundfläche der U-förmigen Anschläge 15 auf, bevor die Querstege 7,7a,7b und die Querträger 8 ihre Endposition in den Anschlägen 15 erreicht haben.

Die Dreifach-Funktion der O-Ringdichtung 8t kann selbstverständlich auch durch drei separate Dichtungen erfüllt werden, von denen eine für das Abdichten der Hülsenöffnung gegen das Eindringen von Umgebungsfeuchtigkeit, die zweite für das Abdichten der offenen Schnittkante 10b gegen die Umgebungsfeuchtigkeit und die dritte dazu vorgesehen ist, das Eindringen von Kleber J in die Hülsenöffnung zu verhindern.

Die Anschlusselemente 8g,8h nehmen die von den als Verbindungselemente eingesetzten Schrauben 28 übertragenen Kräfte auf und leiten sie zum überwiegenden Teil als Druckkräfte in den Grundkörper 8d der Querträger 8.

An ihren Längsseiten sind die Kammern 18 durch jeweils ein Abdeckelement 19,20 abgedeckt. Die Abdeckelemente 19,20 sind als identische Hohlprofile ausgebildet. Sie sind bevorzugt aus kostengünstigem Kunststoffwerkstoff, beispielsweise einem PVC-Material, hergestellt. An ihren Enden sind die Abdeckelemente 19,20 jeweils dicht verschlossen.

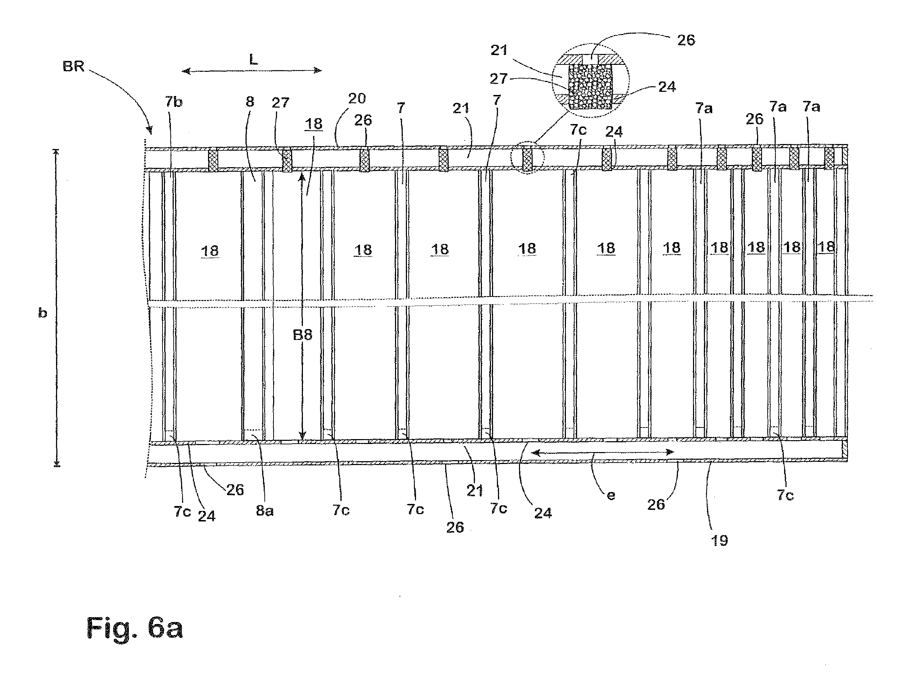

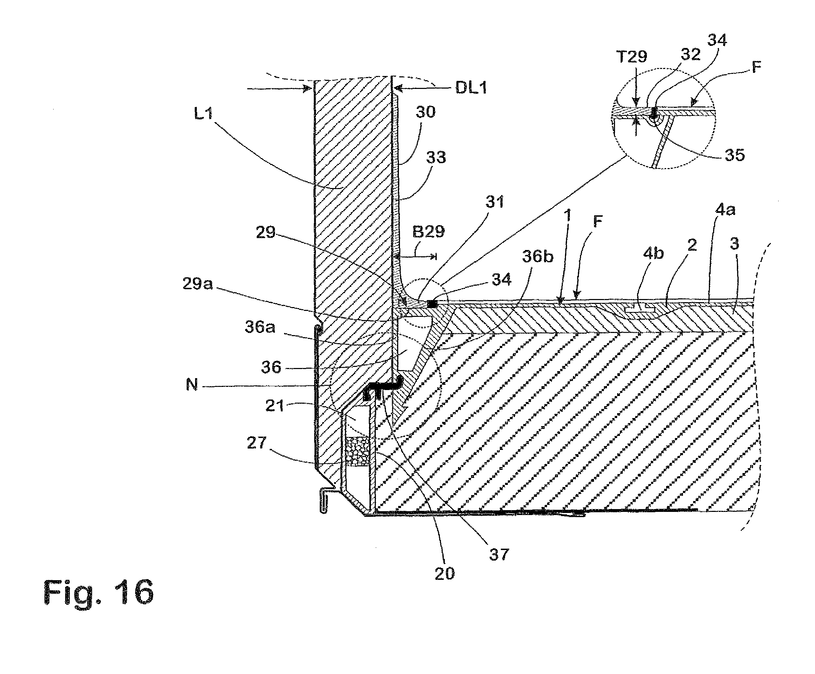

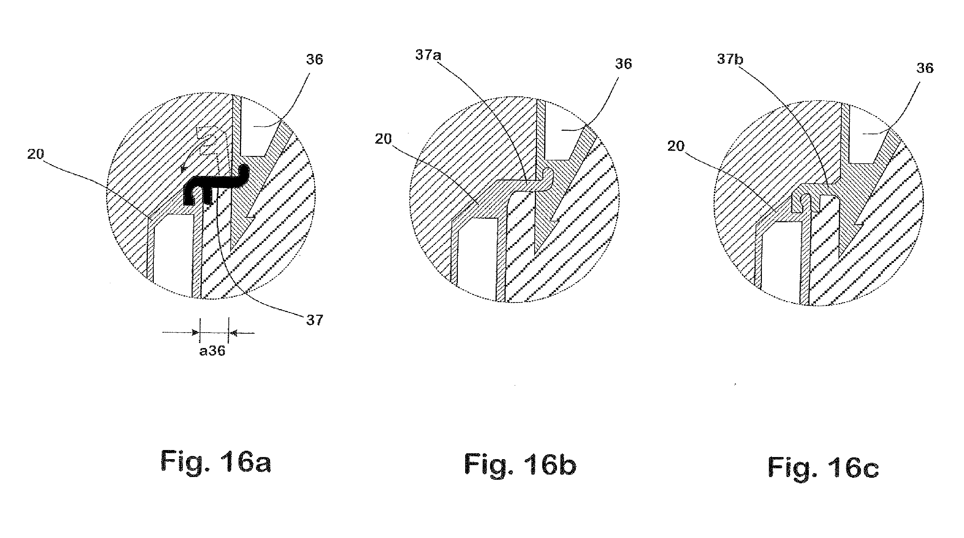

Beim in Fig. 6a und Fig. 16 dargestellten Ausführungsbeispiel weisen die Abdeckelemente 19,20 jeweils einen sich über ihre gesamte Länge erstreckenden Längskanal 21 auf.

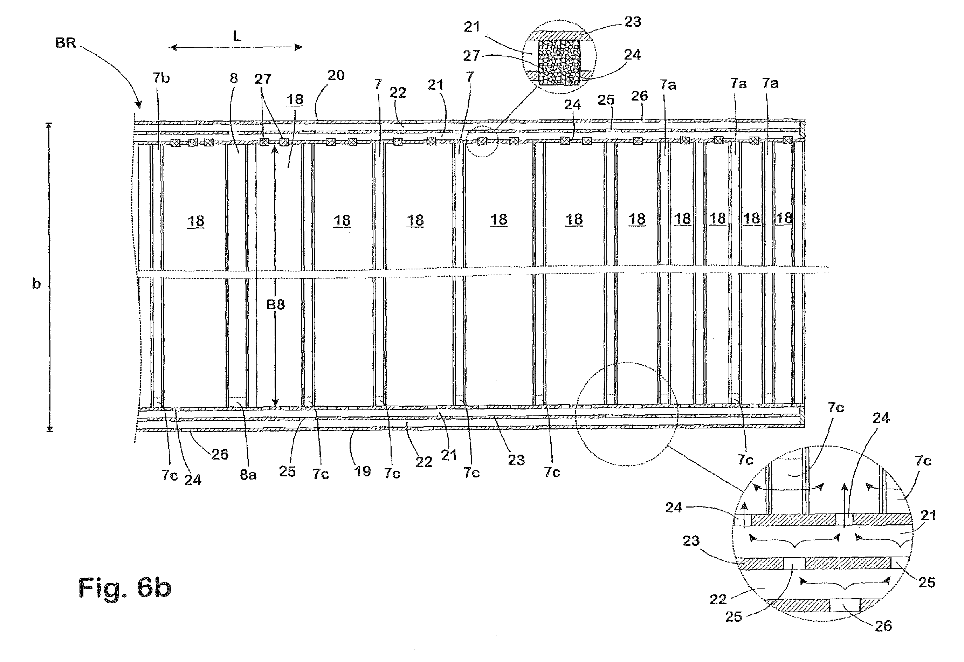

Bei der in Fig. 6b gezeigten Variante weisen die Abdeckelemente 19,20 neben dem ersten Längskanal 21 jeweils noch einen zweiten Längskanal 22 auf, der sich parallel zum ersten Längskanal 21 erstreckt. Die Längskanäle 21,22 sind dabei durch eine Trennwand 23 getrennt. In Fig. 6b sind die Längskanäle 21,22 der Übersichtlichkeit halber nebeneinander angeordnet dargestellt. Sie können jedoch auch übereinander liegend positioniert werden.

Der jeweils an die Kammern 18 des Bodenelements B grenzende Längskanal 21 der Abdeckelemente 19,20 ist über Zugangsöffnungen 24 mit der jeweils angrenzenden Kammer 18 verbunden.

Die Schaumzufuhr erfolgt über Anschlussöffnungen 26, die jeweils in die Außenwand des Abdeckelements 19 eingeformt sind. Die Größe und Anordnung der Anschlussöffnungen 26 ist dabei so gewählt, dass in dem jeweils vorhandenen Längskanal 21,22 jeweils ein Schaumvolumenstrom zur Verfügung steht, der ausreicht, um über den Längskanal 21 die an diesen unmittelbar angeschlossenen Kammern 18 des Bodenelements B gleichmäßig mit Schaum zu versorgen.

Beim in Fig. 6a gezeigten Ausführungsbeispiel nimmt die Größe der Öffnungsflächen der Zugangsöffnungen 24 mit zunehmender Entfernung e zur jeweils nächst benachbarten Anschlussöffnung 26 zu.

Beim in Fig. 6b gezeigten Ausführungsbeispiel sind den Kammern 18 des Bodenelements B mit größerem Volumen dagegen erforderlichenfalls zwei oder mehr Zugangsöffnungen 23 zugeordnet, während die beispielsweise im Einfahrbereich G vorhandenen Kammern 18 mit kleinerem Volumen jeweils nur über eine Öffnung 24 mit dem Längskanal 21 verbunden sind. Genauso wäre es auch bei dieser Variante denkbar, die großvolumigeren Kammern 18 über eine Zugangsöffnung 24 mit größerem Durchmesser als die kleineren Kammern 18 zu versorgen.

Beim in Fig. 6b gezeigten Ausführungsbeispiel sind die Längskanäle 21,22 der Abdeckelemente 19,20 untereinander über in die Trennwand 23 einformte Verbindungsöffnungen 25 verbunden. Die Größe und Position der Verbindungsöffnungen 25 ist dabei so gewählt, dass über den Längskanal 22 zugeführter Schaum in ausreichend großen Volumenströmen den einzelnen Abschnitten des Längskanals 21 zugeführt wird, von dem aus der Schaum dann auf die Kammern 18 des Bodenelements B verteilt wird. In der Praxis ist die Öffnungsfläche der Verbindungsöffnungen 25 größer als die Öffnungsfläche der Zugangsöffnungen 23.

Sowohl bei dem in Fig. 6a als auch bei dem in Fig. 6b gezeigten Ausführungsbeispiel ist es mit Hilfe des als Hohlprofil ausgebildeten Abdeckelements 19 somit möglich, über eine verhältnismäßig geringe Anzahl von Anschlussöffnungen 26 einen fließfähigen Schaum gleichmäßig auf eine große Anzahl von Kammern 18 des Bodenrohelements 19 zu verteilen. Durch die Variation der Größe, Anordnung und Zahl der Zugangsöffnungen 24 unter Berücksichtigung ihrer Lage relativ zu der jeweiligen Anschlussöffnung 26 und dem Volumen der Kammern 18 ist bei den in den Figuren 6a und 6b gezeigten Ausführungsbeispielen eine gleichmäßige Befüllung der Kammern 8 mit Schaum auch dann gewährleistet, wenn der Schaum nur über eine gemessen an der Zahl der Kammern 18 kleine Anzahl von Anschlussöffnungen 26 zugeführt wird.

Da die Befüllung der Kammern 18 nur über eines der Abdeckelemente 19,20 erfolgt, wäre es ausreichend, wenn alleine das zu diesem Zweck verwendete Abdeckelement 19 in der voranstehend beschriebenen Weise als Hohlprofil ausgebildet wäre. Das andere Abdeckelement 20 könnte demgegenüber als einfache Abdeckplatte ausgebildet sein. In diese müssten lediglich ausreichend große Entlüftungsöffnungen eingeformt sein, durch die die Gase austreten können, die von dem in die Kammern 18 eingefüllten Schaum verdrängt bzw. freigesetzt werden. Auch wäre es denkbar, auf das zweite Abdeckelement 20 vollständig zu verzichten, wenn beim Befüllen der Kammern 18 ein Werkzeug zur Verfügung steht, das die Kammern 18 auf ihrer zum Abdeckelement 19 gegenüberliegenden Seite verschließt und die in den Kammern 18 vorhandenen und von dem Schaum verdrängten Gase absaugt. Im Hinblick auf eine Vereinfachung der Fertigung und der Symmetrie der Formgebung kann es jedoch zweckmäßig sein, beide Abdeckelemente 19,20 wie vorliegend erläutert als identische Hohlprofile auszubilden.

Beim Abdeckelement 20 dienen die zu den Kammern 18 führenden Zugangsöffnungen 24 als Entlüftungsöffnungen, über die die in den Kammern 18 vorhandenen Gase abströmen können, und die Anschlussöffnungen 26 zum Absaugen der Gase mit Hilfe einer hier nicht gezeigten Absaugeinrichtung. Um einen Austritt von unerwünscht großen Schaummengen aus den betreffenden Zugangsöffnungen 24 des Abdeckelements 20 beim Befüllen des Bodenelements B zu verhindern, sind in den Zugangsöffnungen 24 des Abdeckelements 20 gasdurchlässige Stopfen 27 vorgesehen. Diese können beispielsweise aus einem engmaschigen Gitter oder einem offenporigen Schaumstoffmaterial hergestellt sein, dessen Gitter- bzw. Porenweite so bemessen ist, dass sie den Durchtritt von größeren Schaummengen verhindern, die aus den Kammern 18 abströmenden Gase jedoch ungehindert durchtreten lassen. Aus dem Abdeckelement 20 tritt das aus den Kammern 18 abströmende Gasgemisch über die in die äußere Wand des Abdeckelements 20 eingeformte Anschlussöffnungen 26 aus.

Zur Herstellung eines Bodenelements B wird zunächst ein hohles, noch nicht mit Schaum gefülltes Bodenrohelement BR hergestellt. Dazu werden eine Deckschicht 2, die in der voranstehend bereits erläuterten Weise aus verschweißten Aluminium-Formteilen 4,4a zusammengesetzt ist, und eine als Holzpanel angelieferte Tragschicht 3 miteinander verklebt. In die den Querstegen 7,7a,7b und Querträgern 8 zugeordnete Unterseite der Tragschicht 3 sind die für die anschließende Positionierung der Querstege 7,7a,7b und Querträger 8 benötigten Dübelöffnungen 11 bereits eingeformt.

Für das Verkleben wird die Tragschicht 3 auf ihrer der Deckschicht 2 zugeordneten Oberseite mit Kleber bestrichen. Anschließend wird die Deckschicht 2 aufgelegt und mit der Tragschicht 3 verpresst, bis der Kleber ausgehärtet ist und Deckschicht 2 und Tragschicht 3 unlösbar zu der oberen Decklage 1 miteinander verbunden sind.

In die Dübelöffnungen 11 wird nun jeweils ein Dübel 12 eingesetzt. Anschließend wird auf die den Querträgern 7,7a,7b und Querstegen 8 zugeordneten Unterseite der Tragschicht 3 an den Stellen, an denen die betreffenden Teile positioniert werden sollen, Kleber aufgetragen und die Querstege 7,7a,7b sowie Querträger 8 an den für sie jeweils vorgesehenen Positionen positioniert. Die in der Tragschicht 3 der oberen Decklage 1 sitzenden Dübel 12 greifen dabei in die ihnen zugeordneten Öffnungen 14 der Querstege 7,7a,7b und Querträger 8 und sichern die lagerichtige Anordnung des jeweiligen Querstegs 7,7a,7b bzw. Querträgers 8 sowie den Querspalt 13.

Daraufhin wird die aus Stahlblechen vorgefertigte untere Decklage 10 auf die Querstege 7,7a,7b und Querträger 8 aufgelegt. Dazu wird zuvor eine ausreichende Klebermenge J in die im Querschnitt U-förmigen Anschläge 15 gefüllt, wobei bei den Anschlägen 15, in die Querträger 8 gesetzt werden, die Stellen, an denen sich Öffnungen 10a befinden, so weit ausgelassen werden, dass die Öffnungen von einem kleberfreien Randbereich umgeben sind, dessen Durchmesser mindestens gleich dem Außendurchmesser der Kragen der Hülsen 8r,8s der Querträger 8 ist. Die gegenüber der Aufstandfläche 8i vorstehenden Hülsen 8r,8s setzen infolgedessen mit ihrer O-Ringdichtung 8t und der Stirnfläche ihres Kragens auf dem kleberfreien Randbereich auf. Die O-Ringdichtung 8t verhindert auf diese Weise, dass der sich anschließend selbsttätig in der voranstehend bereits beschriebenen Weise in den Anschlägen 15 verteilende Kleber in die Hülsenöffnung gelangt.

Um die Aushärtung des Klebers zwischen der aus Holzwerkstoff bestehenden Tragschicht 3 und der aus Aluminium bestehenden Deckschicht 2 zu beschleunigen, wird die Tragschicht 3 vor dem Auftrag des Klebers in einem Durchlaufofen auf eine Temperatur erwärmt, die über der Umgebungstemperatur liegt. Je größer die Temperaturdifferenz zwischen der Umgebungstemperatur und der Temperatur des zu verklebenden Holzteils ist, desto schneller härtet der Kleber aus. Typischerweise beträgt die Temperaturdifferenz mindestens 10 °C. Bei einer um 10 °C über der Umgebungstemperatur der Tragschicht 3 liegenden Temperatur halbiert sich die Aushärtzeit.

Dabei wird die Temperatur, auf die die Tragschicht 3 erwärmt wird, selbstverständlich so eingestellt, dass trotz ihrer erhöhten Temperatur zwischen dem Auftrag und dem Aushärten des Klebers ausreichend Zeit für das Fügen der miteinander zu verklebenden Teile bleibt.

Der nach dem Aufsetzen der kalten Deckschicht 2 auf die Tragschicht 3 eintretende Temperaturausgleich ist aufgrund der gegenüber der Tragschicht 3 geringen Masse der Deckschicht 2 und der niedrigen Wärmeleitfähigkeit des Klebers gering. Er kann erforderlichenfalls dadurch kompensiert werden, dass die Temperatur, auf die die Tragschicht 3 erwärmt wird, um die beim Aufsetzen der Deckschicht 2 eintretende Temperaturreduzierung erhöht wird. Dabei kann eine für den Erfolg der Verklebung ungünstige, in Folge der von der erwärmten Tragschicht 3 übertragenen Wärme eintretende Ausdehnung der Deckschicht 2 dadurch verhindert werden, dass die Deckschicht 2 während des Verpressens der Tragschicht 3 mit der Deckschicht 2 gekühlt wird.

In der voranstehend für die Verklebung der Deckschicht 2 mit der Tragschicht 3 der oberen Decklage 1 beschriebenen Weise können auch die anderen miteinander zu verklebenden Teile erwärmt werden, wenn verkürzte Aushärtzeiten des Klebers im Hinblick auf die Einhaltung kurzer Taktfrequenzen bei einer serienmäßigen Herstellung von erfindungsgemäßen Bodenelementen angestrebt werden.

Schließlich wird jeweils eines der Abdeckelemente 19,20 in der voranstehend erläuterten Weise an den Längsseiten des Bodenrohelements BR befestigt.

Das so erhaltene fertige Bodenrohelement BR (Fig. 7) wird dann um seine Längsachse LA verschwenkt, bis die obere und die untere Decklage 1,10 jeweils vertikal ausgerichtet und das Abdeckelement 19, über das anschließend die Schaumzufuhr erfolgt, an der tiefsten Stelle angeordnet ist.

Das Bodenrohelement BR befindet sich in dieser Stellung in einem Presswerkzeug P mit zwei Werkzeughälften P1,P2, von denen die eine Werkzeughälfte P1 auf die eben ausgebildete freie Oberseite der Decklage 1 drückt, während die andere Werkzeughälfte P2 auf die ebenso eben ausgebildete Unterseite US der unteren Decklage 10 wirkt. Aufgrund dessen, dass die obere Decklage 1 und die untere Decklage 10 an den Seiten, auf die die jeweilige Werkzeughälfte wirkt, im Wesentlichen eben sind, können auch die Anlageflächen der Werkzeughälften P1,P2 eben gestaltet sein. Längentoleranzen des sehr langen Bodenrohelements BR können dabei durch ein entsprechendes Übermaß der Anlageflächen der Presswerkzeuge P1,P2 in Längsrichtung L ohne weiteres ausgeglichen werden. Dies ist auch dann noch der Fall, wenn jeweils maximal ein Absatz auf der Unterseite US der unteren Decklage 10 oder Ladefläche F der oberen Decklage 1 vorhanden ist. Ist ein solcher Absatz auf der jeweiligen Seite der Decklagen 1,10 vorhanden, so weist auch die jeweilige Anlagefläche der Werkzeughälften einen korrespondierenden Absatz auf, von dem ausgehend dann die Längentoleranzen ausgeglichen werden, ohne dass es dazu einer besonderen Maßnahme bedarf.

Nun wird über die Anschlussöffnungen 26 fließfähiger PU-Schaum in das Abdeckelement 19 geleitet. Beim in Fig. 6a gezeigten Ausführungsbeispiel gelangt der Schaum von dort direkt in die Kammern 18. Bei der in Fig. 6b gezeigten Variante gelangt er dagegen zunächst in den außen liegenden Längskanal 22, von dem der Schaum über die Verbindungsöffnungen 25 in den Längskanal 21 des Abdeckelements 19 tritt. Über den Längskanal 21 gelangt der Schaum dann in die Kammern 18 des Bodenrohelements.

Bei beiden Ausführungsbeispielen sind die Größe, Anordnung und Anzahl der Anschlussöffnungen 26, der gegebenenfalls vorhandenen Verbindungsöffnungen 25 und der zu den Kammern 18 führenden Zugangsöffnungen 24 so gewählt, dass während des Füllvorgangs der Schaum in den Kammern 18 im Wesentlichen gleichmäßig ansteigt. Zur Vergleichmäßigung des Füllstands der Kammern 18 trägt bei, dass es über die angrenzend zum Abdeckelement 19 angeordneten Ausnehmungen 8a der Querstege 7,7a,7b und Querträger 8 selbsttätig zu einer Ausgleichsbewegung zwischen den in die Kammern 18 des Bodenrohelements BR gefüllten Schaumvolumina kommt (Fig. 8).

Nach Abschluss des Füllvorgangs beginnt der in die Kammern 18 gefüllte Schaum zu expandieren. Er steigt dabei gegen die Schwerkraftwirkung in den Kammern 18 auf, bis er die als Entlüftungsöffnung dienende Zugangsöffnungen 24 des Abdeckelements 20 erreicht. Der in den Zugangsöffnungen 24 des Abdeckelements 20 jeweils sitzende Stopfen verhindert, dass größere Schaummengen in das Abdeckelement 20 eintreten, lässt aber die während des Expandierens des Schaums freigesetzten Gase und die in den Kammern 18 enthaltene Luft passieren, die von dem expandierenden Schaum aus den Kammern 18 gedrängt werden. Die aus den Kammern 18 austretenden Gase werden über die Anschlussöffnung 26 des Abdeckelements 20 kontrolliert abgesaugt und nach einer geeigneten Filterung in die Umgebung abgeblasen.

Indem der Schaum daran gehindert wird, aus den Kammern 18 frei auszutreten, entsteht in den Kammern 18 eine besonders dichte und kompakte Schaumfüllung.

Nach Ablauf der für das Expandieren und Aushärten des Schaums erforderlichen Zeit steht ein fertiges Bodenelement B zur Verfügung, dessen Kammern 18 mit der Schaumfüllung SF gefüllt sind (Fig. 9). Während der Expansions- und Aushärtphase kann das Bodenelement B bereits zur nächsten Bearbeitungsstation transportiert werden.

Beim fertigen Bodenelement B sind das Abdeckelement 19, über das die Schaumzufuhr erfolgt ist, und die Kammern 18 vollständig mit einer Schaumfüllung SF gefüllt, während das Abdeckelement 20, über das die aus den Kammern 18 ausgetretenen Gase abgeführt worden sind, allenfalls unvollständig mit Schaum gefüllt ist.

Die sich längs der Längsseitenwände L1,L2 erstreckenden Formteile 4a der Deckschicht 2 der oberen Decklage 1 unterscheiden sich von den anderen Formteilen 4, aus denen die Deckschicht 2 der oberen Decklage 1 zusammengesetzt ist, unter anderem dadurch, dass in ihren sich längs der jeweiligen Längsseitenwand L1,L2 erstreckenden Randbereich ein Absatz 29 eingesenkt ist. Auf der Aufstandfläche 29a des Absatzes 29 steht jeweils eine im Querschnitt L-förmige Sockelscheuerleiste 30 mit ihrem der Ladefläche F zugeordneten Schenkel 31. Die Tiefe T29 des Absatzes 29 entspricht dabei der Dicke des Schenkels 31, so dass die freie Oberseite 32 des Schenkels 31 im Wesentlichen flächenbündig zur Ladefläche F ausgerichtet ist. Gleichzeitig ist die Breite B29 des Absatzes 29 so an die Breite des Schenkels 31 angepasst, dass die Sockelscheuerleiste 30 mit Spiel kraftfrei in den Absatz 29 gesetzt werden kann. Ihr der jeweiligen Längsseitenwand L1,L2 zugeordnete Schenkel 33 liegt dabei an der betreffenden Längsseitenwand L1,L2 an und ist mit dieser verklebt.

Indem die Oberseite 32 des Schenkels 31 der Sockelscheuerleiste 30 im Wesentlichen flächenbündig zur Ladefläche ausgerichtet ist, wird einerseits die Ansammlung von Schmutz um Übergangsbereich zwischen dem Schenkel 31 und der Ladefläche F vermieden. Darüber hinaus behindern bei dieser Anordnung auch keine Kanten der Sockelscheuerleiste 30 das Be- und Entladen des Kofferaufbaus B.

Zur weiteren Verbesserung der hygienischen Unbedenklichkeit des Anschlusses der Sockelscheuerleiste 30 an die Ladefläche F ist die im Bereich des Übergangs zwischen dem Schenkel 31 und der Ladefläche F vorhandene Fuge durch eine Längsnahtschweißung 34 geschlossen. Damit diese ebenfalls nicht über die Ladefläche F hinaussteht, ist in das jeweilige Formteil 4a am Übergang vom Absatz 29 zu der Ladefläche F ein Kanal 35 eingeformt, der von der Vorderkante des Schenkels 31 überragt wird. Bei der Erzeugung der Längsnahtschweißung 34 anfallendes schmelzflüssiges Metall sackt in diesen Kanal 35, so dass die Längsnahtschweißung 34 auf ihrer freien Oberseite eben ausgebildet ist und im Wesentlichen flächenbündig in die angrenzende Oberseite 32 des Schenkels 30 und die Ladefläche F übergeht. In der Fachsprache wird der Kanal 35 auch als "Schweißbartstütze" bezeichnet.

Die Sockelscheuerleiste 31 schützt nicht nur den Kantenbereich zwischen dem Bodenelement B und der jeweiligen Längsseitenwand L1,L2, sondern dient auch zur Verstärkung der Anbindung der Längsseitenwand L1,L2 an das Bodenelement. Letztere Funktion wird dadurch unterstützt, dass unterhalb des Absatzes 29 an das Formteil 4 einstückig ein Stützprofil 36 angeformt ist. Das Profil 36 weist einen ersten Schenkel 36a auf, der ausgehend vom jeweiligen Längsrand der Deckschicht 2 im Wesentlichen rechtwinklig zur Ladefläche F ausgerichtet in das Bodenelement B hineinragt. Zwischen dem der Ladefläche F abgewandten Ende dieses Schenkels 36a und der oberen Deckschicht 2 verläuft schräg ein weiterer Schenkel 36b des Stützprofils 36. Dieser Schenkel 36b ist derart angeschrägt und angeordnet, dass er auf den an den Schmalseiten der Querstege 7,7a,7b und Querträger 8 vorhandenen Schrägflächen 8c abgestützt ist. An der der jeweiligen Längsseitenwand L1,L2 zugeordneten Außenfläche des Schenkels 36a liegt die betreffende Längsseitenwand L1,L2 an und ist dort mit dem Profil 36 und damit einhergehend mit dem Bodenelement B verklebt.

Zwischen dem jeweiligen Abdeckelement 19,20 und dem ihm jeweils zugeordneten Stützprofil 36 besteht jeweils ein Abstand, dessen lichte Weite a36 abhängig ist von der Gesamtdicke DL1 der Längsseitenwand L1. Diese werden abhängig von der geforderten Isolierwirkung und der von ihnen aufzunehmenden Last in unterschiedlichen Dicken verbaut. Um dabei unabhängig von der jeweiligen Gesamtdicke DL1 jeweils die maximal zulässige Breite des Kofferaufbaus K ausnutzen zu können, wird der Längsrand der oberen Decklage 1 in Abhängigkeit von der jeweiligen Gesamtdicke DL1 mehr oder weniger weit gegenüber dem Längsrand der unteren Decklage 10 versetzt. Dementsprechend unterschiedlich ist auch die lichte Weite a36 zwischen dem Stützprofil 36 und dem jeweiligen Abdeckelement 19,20.

Um diesen Abstand schaumdicht zu überbrücken, ist gemäß der in Fig. 16 und Fig. 16a dargestellten Variante ein aus Kunststoff hergestelltes, leistenförmiges Übergangsstück 37 vorgesehen, das mit seinem einen Längsrand formschlüssig in eine in das jeweilige Abdeckelement 19,20 eingeformte Nut greift, während es mit seinem anderen Längsrand ebenso formschlüssig in einer in das jeweilige Stützprofil 36 eingeformten Nut sitzt. Diese Ausgestaltung hat den Vorteil, dass jeweils nur ein anderes Übergangsstück 37 bei ansonsten identischer Gestaltung der Stützprofile 36 und Abdeckelemente 19,20 verwendet werden muss, wenn eine Längsseitenwand L1 mit anderer Dicke eingebaut werden soll.

Alternativ ist es auch möglich, ein entsprechendes Übergangsstück 37a einstückig an das jeweilige Abdeckelement 20 (Fig. 16b) anzuformen und dieses in die Nut des Stützprofils 36 greifen zu lassen, oder umgekehrt ein Übergangsstück 37b einstückig an das jeweilige Stützprofil 36 anzuformen und dieses in die Nut des Abdeckelements greifen zu lassen (Fig. 16c).

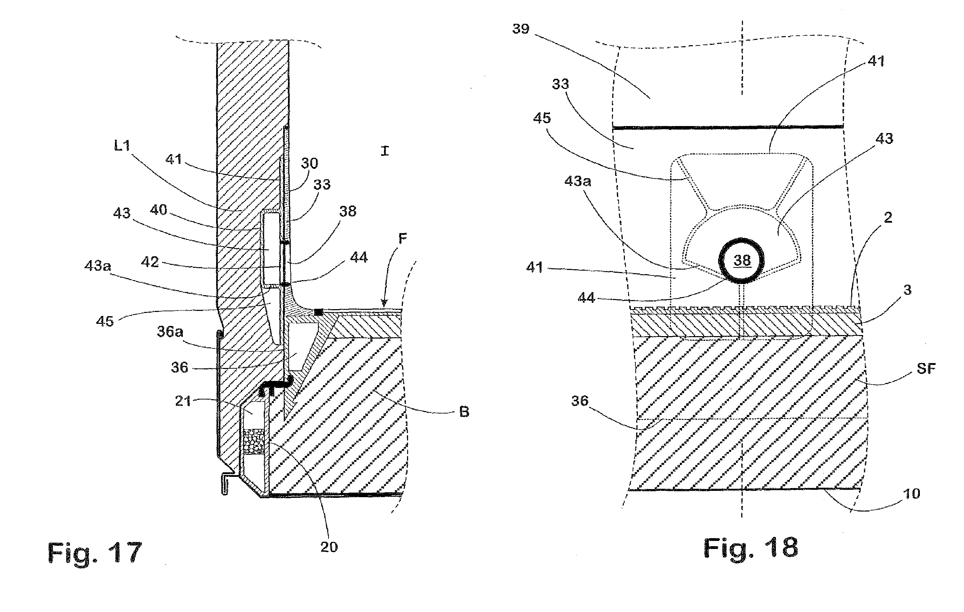

Um die in dem Innenraum I des Kofferaufbaus K zu transportierende Last T zu sichern, können an den Längsseitenwänden L1,L2 so genannte "Ladungssicherungsösen" ausgebildet sein. Dabei handelt es sich um als Anschlag für ein Anschlagmittel, wie einen Haken oder einen Anker, eines Zurrmittels, wie eines Zurrbands oder desgleichen, dienende Anschlagöffnungen 38, die (s. Fig. 17,18) beim hier beschriebenen Ausführungsbeispiel in die Längsseitenwände L1,L2 auf Höhe des an der jeweiligen Längsseitenwand L1,L2 anliegenden Schenkels 33 der Sockelscheuerleiste 30 in die dem Innenraum I zugeordnete innere aus Stahlblech bestehenden Decklage 39 der jeweiligen Längsseitenwand L1,L2 eingeformt sind. Die Anschlagöffnungen 38 sind dabei sowohl durch die innere Decklage 39 als auch durch den daran anliegenden Schenkel 33 der Sockelscheuerleiste 30 geführt.

Um auch schwere Lasten und hohe Spannkräfte aufnehmen zu können, sitzt auf der vom Innenraum I des Kofferaufbaus K abgewandten Seite der inneren Decklage 39 ein als Aluminiumgussteil vorgefertigtes Verstärkungsteil 40, das eine auf der betreffenden Seite aufliegende Verstärkungsplatte 41 aufweist. In diese Verstärkungsplatte 41 ist eine Öffnung 42 eingeformt, die die in die innere Decklage 39 und die Sockelscheuerleiste 30 eingeformte Anschlagöffnung 38 überdeckt. Die Verstärkungsplatte 41 ist dabei so ausgelegt, dass sie sich mit ihrem unteren Bereich mit dem Bodenelement B überlappt, um eine maximale Abstützung des Verstärkungsteils 40 zu sichern. Dabei sind die Sockelscheuerleiste 30, die innere Decklage 39 der Längsseitenwand L1 und die Verstärkungsplatte 41 über eine um den Rand der Anschlagöffnung 38 umlaufende Verschweißung 44 stoffschlüssig miteinander verbunden.

Das Verstärkungsteil 40 weist zusätzlich zu der Verstärkungsplatte 41 eine Aufnahme 43 auf, die nach Art einer Tasche ausgebildet ist und mit ihrem unteren Rand 43a im Wesentlichen bündig mit dem in Schwerkraftwirkrichtung unteren Randabschnitt der Anschlagöffnung 38 ausgerichtet ist. Dies verhindert zum einen Ansammlungen von Schmutz und Reinigungsmittel im Bereich der Aufnahme 43. Zum anderen kann sich so ein in die Anschlagöffnung 38 eingeführter, hier nicht dargestellter Haken auf dem unteren Rand 43a der Aufnahme 43 abstützen. Auf diese Weise sitzt er verliersicher in der Anschlagöffnung 38 und ist dabei bereits mit seiner Spitze an der Verstärkungsplatte 41 abgestützt.

Das jeweilige Spannmittel kann so auch durch eine Person alleine gespannt werden, während der Haken sicher in der Anschlagöffnung 38 gehalten ist. Da die taschenförmige Aufnahme 43 die Öffnung mit einem für ein problemloses Einführen des Hakens ausreichendem Abstand umgibt, ist dabei sichergestellt, dass der Haken die Schaumfüllung der jeweiligen Längsseitenwand L1 nicht verletzt. Auf ihrer von dem Innenraum I abgewandten Seite ist die Verstärkungsplatte 40 durch Versteifungsrippen 45 ausgesteift.

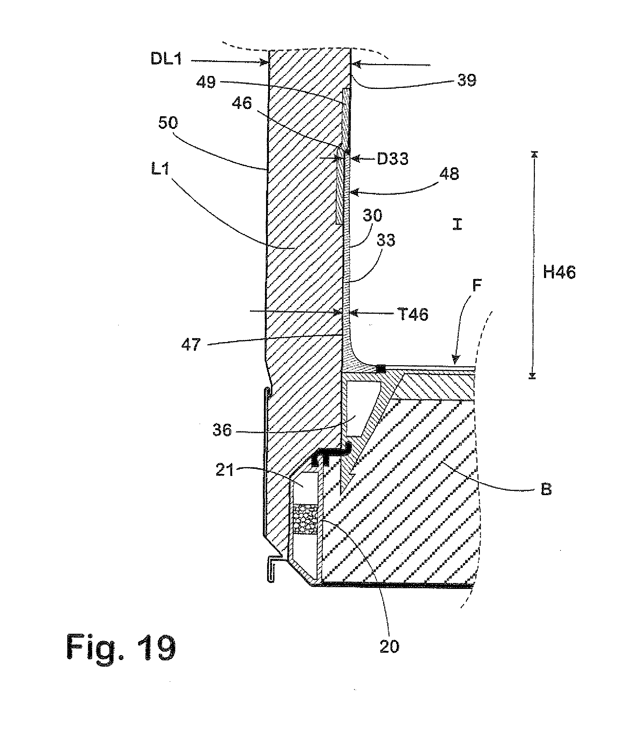

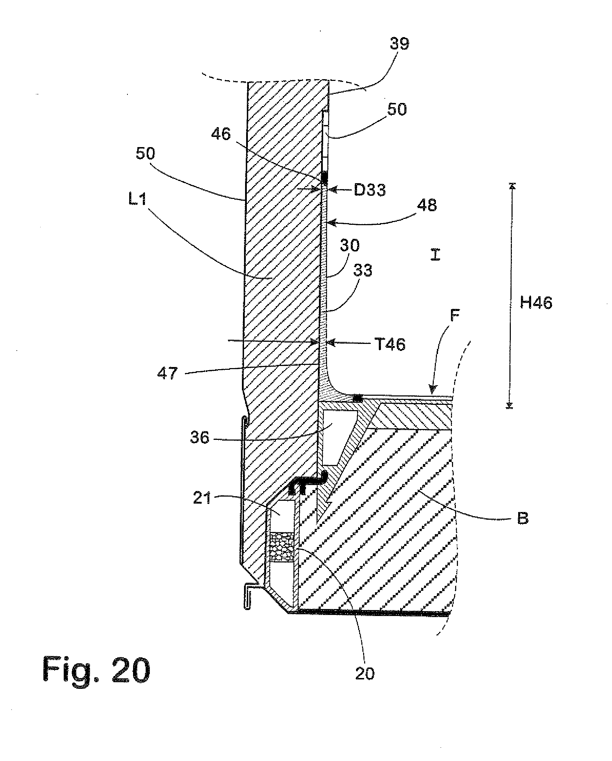

Um eine maximale Dicke DL1 der Längsseitenwandelemente L1,L2 zu ermöglichen, ist bei den in den Figuren 19 und 20 gezeigten Ausführungsbeispielen in den an das Bodenelement B angrenzenden Bereich der inneren Decklage 39 der Längsseitenwandelemente L1,L2 ein sich in Längsrichtung L erstreckender Absatz 46 mit einer Anlagefläche 47 zum Ansetzen des dem jeweiligen Seitenwandelement L1,L2 zugeordneten einen Schenkels 33 der L-förmigen Sockelscheuerleiste 30 eingeformt. Bei beiden in den Figuren 19,20 dargestellten Ausführungsbeispielen entspricht dabei die Tiefe T46 des Absatzes 46 der im Bereich des oberen freien Längsrandes des Schenkels 33 der Sockelleiste 30 vorhandenen geringsten Dicke D33 des Schenkels. Beim Ausführungsbeispiel gemäß Fig. 19 entspricht gleichzeitig die Höhe H47 der Anlagefläche 47 des Absatzes 46 bis uaf ein geringes Übermaß der Höhe des Schenkels 33 der an der Anlagefläche 47 sitzenden Sockelscheuerleiste 30. Auf diese Weise kann die Sockelscheuerleiste 30 mit leichtem Spiel problemlos an die Anlagefläche 47 gesetzt und mit ihr verklebt werden. Eine hygienisch einwandfreie Abdichtung der zwischen der oberen Begrenzungskante des Absatzes 46 und dem freien Längsrand des Schenkels 33 vorhandenen Fuge kann beispielsweise dadurch erfolgen, dass dort eine Längsnahtverschweißung durchgeführt wird oder ein entsprechender Dichtstoff eingefüllt wird.

Um sicherzustellen, dass es auch im Bereich der oberen Begrenzungskante des Absatzes 46 zu keiner Verformung in Folge der auf den Seitenwänden L1,L2 ist auf die vom Innenraum I abgewandte Seite der inneren Decklage 39 des jeweiligen Seitenwandelements L1,L2 ein Verstärkungsblech 49 aufgelegt, durch das die innere Decklage 39 im Bereich des Übergangs der Anlagefläche 47 in die außerhalb des Absatzes 46 liegende Fläche der inneren Decklage 39 ausgesteift ist. Dieses Verstärkungsblech 49 erstreckt sich über die gesamte Länge des Absatzes 46 erstreckt.

Das in Fig. 20 gezeigte Ausführungsbeispiel unterscheidet sich von dem in Fig. 19 gezeigten dadurch, dass beim Ausführungsbeispiel der Fig. 20 die Höhe H46 des Absatzes 46 so viel größer ist als die Höhe des Schenkels 33 der Sockelscheuerleiste 30, dass oberhalb des Schenkels 33 und mit Abstand zu diesem innerhalb des Absatzes eine aus einem ausreichend festen Stahlmaterial Ladungssicherungsschiene 50 sitzt. Die Ladungssicherungsschiene 50 ist dabei so ausgelegt, dass sie auch hohe Zurrkräfte aufnehmen kann. Sie liegt mit ihrer oberen Längskante an der oberen Begrenzungskante des Absatzes 46 an und übernimmt so zusätzlich die aussteifende Funktion, die beim Ausführungsbeispiel der Fig. 19 von dem Verstärkungsblech 49 erfüllt wird. Mit der jeweiligen Längsseitenwand L1,L2 ist die Ladungssicherungsschiene 50 dabei verklebt oder verschweißt.

Die durch die Anordnung des Schenkels 33 in dem Absatz 46 ermöglichte zusätzliche Dicke der jeweiligen Seitenwand L1,L2 führt zu einer deutlichen Steigerung des k-Wertes der Längsseitenwände L1,L2, ohne dass damit eine Verminderung des für die Beladung effektiv nutzbaren Volumens des Innenraums I des Kofferaufbaus K einhergeht. Der Schutz der jeweiligen Seitenwand L1,L2 gegen Beschädigung beim Be- und Entladen ist dabei dadurch sichergestellt, dass der Schenkel 33 im Bereich seines Übergangs zu dem auf der Deckschicht 2 des Bodenelements B stehenden Schenkel 31 eine Dicke aufweist, die größer ist als seine der Tiefe T46 des Absatzes 46 entsprechende Dicke D33. Dementsprechend steht der Schenkel 33 im Bereich des Übergangs zum Schenkel 31 der Sockelscheuerleiste 30 vor der inneren Decklage 39 vor und hält das in den Innenraum I geladene Gut mit Abstand zur jeweiligen Seitenwand L1,L2.

| **Bezugszeichen** | |
|---|---|
| 1 | obere Decklage des Bodenelements B |
| 2 | Deckschicht der oberen Decklage 1 |
| 3 | Tragschicht der oberen Decklage 1 |
| 3a | Einsenkungen |
| 4,4a | Formteile (Flachprofile) |
| 4b | Nutschiene |
| 5 | Verschweißungen |
| 6 | Profilierung |
| 7,7a,7b | Querstege des Bodenelements B |
| 7c | Ausnehmung der Querstege 7,7a,7b |
| 8 | Querträger |
| 8a | Ausnehmungen der Querträger 8 |
| 8b | Eckbereiche des Querträgers 8 |
| 8c | Schrägflächen des Querträgers 8 |
| 8d | Grundkörper des Querträgers 8 |
| 8e,8f | Ausnehmungen des Grundkörpers 8c |
| 8g,8h | Anschlusselemente |
| 8i | Aufstandfläche |
| 8j | Vorsprünge |
| 8k,8l | Sicherungselement |
| 8m,8n | Seitenflächen |
| 8o | Absatz |
| 8p | Schraube |
| 8q | Öffnungen |
| 8r,8s | Hülse |
| 8t | Ringdichtung |
| 8u | Vorsprünge |
| 9 | Längsträger des Fahrwerkchassis C |
| 10 | untere Decklage des Bodenelements B |
| 10a | Öffnungen der unteren Decklage 10 |
| 10b | Schnittkante der Öffnung 10a |
| 11 | Öffnungen |
| 12 | Dübel |
| 12a | oberer Dübelabschnitt |
| 12b | Absatz des Dübels 12 |
| 12c | unterer Dübelabschnitt |
| 13 | Klebespalt |
| 14 | Scheuerplatte |
| 15 | Anschläge |
| 15a,15b | Schenkel der Anschläge 15 |
| 16,16a | Abteilelemente |
| 17 | Schlitz |
| 18 | Kammern des Bodenelements B |
| 19,20 | Abdeckelement |
| 21,22 | Längskanäle des Abdeckelements 19 |
| 23 | Trennwand |
| 24 | Zugangsöffnungen |
| 25 | Verbindungsöffnungen der Trennwand 23 |
| 26 | Anschlussöffnungen für die Schaumzufuhr |
| 27 | Stopfen |
| 29 | Absatz |
| 29a | Aufstandfläche |
| 30 | Sockelscheuerleiste |
| 31 | Schenkel der Sockelscheuerleiste |
| 32 | Oberseite des Schenkels 31 |
| 33 | Schenkel der Sockelscheuerleiste |
| 34 | Längsnahtschweißung |
| 35 | Kanal |
| 36 | Profil |
| 36a | Schenkel des Profils 36 |
| 36b | Schenkel des Profils 36 |
| 37,37a,37b | Übergangsstücke |
| 38 | Anschlagöffnungen |
| 39 | Innere Decklage der Längsseitenwände L1,L2 |
| 40 | Verstärkungsteil |
| 41 | Verstärkungsplatte |
| 42 | Öffnung der Verstärkungsplatte 41 |
| 43 | Aufnahme |
| 43a | Unterer Rand der Aufnahme 43 |
| 44 | Verschweißung |
| 45 | Versteifungsrippen |
| 46 | Absatz des Längsseitenwandelements L1 |
| 47 | Anlagefläche des Absatzes 46 |
| 48 | Oberseite des Schenkels 33 |
| 49 | Verstärkungsblech |
| 50 | Ladungssicherungsschiene |
| A | Auflieger des Sattelzugs S |
| a1,a2,a3 | Abstände der Querstege 7 oder Querträger 8 zueinander |
| a36 | lichte Weite |
| B | Bodenelement des Aufliegers A |
| B | Breite des Bodenelements B |
| B8 | Breite der Querträger 8 und Querstege 7 |
| BR | Bodenrohelement |
| C | Fahrwerkschassis des Aufliegers A |
| D3 | Dicke der Tragschicht 3 |
| D8 | Dicke der Querträger 8 |
| D33 | Geringste Dicke des Schenkels 33 |
| DL1 | Gesamtdicke der Seitenwand L1 |
| E1,E2,E3 | Bereiche unterschiedlich großer Belastung der unteren Decklage des Bodenelements B |
| E | jeweiliger Abstand zwischen der Anschlussöffnung 26 und den ihr jeweils zugeordneten Zugangsöffnungen 24 |
| F | Ladefläche des Bodenelements B |
| G | Einfahrbereich der Ladefläche F |
| H8 | Höhe der Querträger 8 |
| H13 | Höhe des Klebespalts 13 |
| H47 | Höhe der Anlagefläche 47 |
| I | Innenraum des Kofferaufbaus K |
| K | Kofferaufbau des Aufliegers A |
| L | Längsrichtung des Bodenelements B |
| L1,L2 | Längseitenwände des Kofferaufbaus K |
| LA | Längsachse des Bodenelements B |
| M | Kühlgerät |
| O | Gleitplatte |
| P | Presswerkzeug |
| P1,P2 | Werkzeughälften des Presswerkzeugs P |
| Q | Königszapfen |
| Q1 | Scheuerplatte |
| Q2,Q3 | Träger |
| Q4,Q5 | L-förmige Trägerteile der Träger Q2,Q3 |
| Q6,Q7 | Bolzverbindungen |
| Q8,Q9 | Punktschweißungen |
| Q10 | Fuge |
| R | Rückwand des Kofferaufbaus K |
| S | Sattelzug des Kofferaufbaus K |
| SF | Schaumfüllung |
| T | zu transportierende Last |
| T28 | Tiefe des Absatzes 28 |
| T46 | Tiefe des Absatzes 46 |
| U | Umgebung |
| US | Unterseite des Bodenelements B |
| V | Stützwindwerk |
| W | Stirnwand des Kofferaufbaus K |
| Z | Zugmaschine des Sattelzugs S |

## Patentansprüche

1. Bodenelement für ein Fahrzeug, wie einen Lastkraftwagen, Auflieger oder Anhänger,
- mit einer oberen Decklage (1), deren freie Oberfläche eine Ladefläche (F) bildet, auf der eine zu transportierende Last (T) abstellbar ist, und
- mit einer unteren Decklage (10), die den Abschluss des Bodenelements (B) zur Unterseite (US) des Fahrzeugs (S) bildet,
- wobei die untere Decklage (10) mindestens auf ihrer freien Unterseite aus einem Blechmaterial, insbesondere einem Stahlblechmaterial, besteht,
**dadurch gekennzeichnet, dass** in dem zwischen den Decklagen (1,10) begrenzten Raum ein Träger (Q2,Q3) angeordnet ist, an dem ein Teilstück (Q1) der unteren Decklage (10) durch Punktverbindungen (Q8,Q9) befestigt ist und der das jeweilige Teilstück (Q1) mit dem an das Teilstück (Q1) jeweils angrenzenden Abschnitt (O) des unteren Bodenelements (B) verbindet.

2. Bodenelement nach Anspruch 1, **dadurch gekennzeichnet, dass** zwischen dem Material des Teilstücks (Q1) und dem Material der dieses Teilstück umgebenden Abschnitten (O) der unteren Decklage (10) eine durchgehende Fuge (Q10) ausgebildet ist.

3. Bodenelement nach einem der voranstehenden Ansprüche,
**dadurch gekennzeichnet, dass** der Träger (Q2,Q3) aus einem schweißbaren Material besteht und die Punktverbindungen als Punktschweißungen (Q8,Q9) ausgeführt sind.

4. Bodenelement nach einem der voranstehenden Ansprüche,
**dadurch gekennzeichnet, dass** der Träger (Q2,Q3) mindestens zweiteilig ausgebildet ist, **dass** das erste Trägerteil (Q4) mit dem an das Teilstück (Q1) angrenzenden Abschnitt (O) der unteren Decklage (10) fest verbunden ist, **dass** das andere Trägerteil (Q5) mit dem Teilstück (Q1) über die Punktverbindungen (Q8,Q9) verbunden ist und **dass** die Trägerteile (Q4,Q5) miteinander fest verbunden sind, um das Teilstück (Q1) fest mit dem jeweils angrenzenden Abschnitt (O) der unteren Decklage (10) zu verbinden.

5. Bodenelement nach Anspruch 4, **dadurch gekennzeichnet, dass** die Verbindung zwischen den Trägerteilen (Q4/Q5) als Bolzverbindung (Q6,Q7) ausgeführt ist.

6. Bodenelement nach Anspruch 4, **dadurch gekennzeichnet, dass** die Verbindung zwischen den Trägerteilen (Q4,Q5) als Schraubverbindung ausgeführt ist.

7. Bodenelement nach Anspruch 4, **dadurch gekennzeichnet, dass** die Verbindung zwischen den Trägerteilen (Q4,Q5) als Schweißverbindung ausgeführt ist.

8. Bodenelement nach einem der voranstehenden Ansprüche,
**dadurch gekennzeichnet, dass** die Fuge (Q10) zwischen dem Teilstück (Q1) und den das Teilstück (Q1) umgebenden Abschnitten (O) der unteren Decklage (10) mit einem Dichtstoff abgedichtet ist.

9. Bodenelement nach einem der voranstehenden Ansprüche,
**dadurch gekennzeichnet, dass** das Teilstück (Q1) eine größere Dicke aufweist als die an das Teilstück (Q1) angrenzenden Abschnitte (O) der unteren Decklage (10).

10. Bodenelement nach einem der voranstehenden Ansprüche,
**dadurch gekennzeichnet, dass** jeweils in Längsrichtung (L) des Bodenelements (B) gesehen maximal ein einziger durch eine Dickenzunahme bedingter, in Richtung der Unterseite (US) des Bodenelements (B) gerichteter Absatz zwischen einer Zone (E2,E3)) größerer Dicke und einer Zone (E1,E2) geringerer Dicke vorhanden ist, während jede weitere Dickenzunahme in Richtung des von den Decklagen (1,10) begrenzten Raums stattfindet, so dass die untere Decklage (10) auf ihrer Unterseite (US) in Längsrichtung (L) des Bodenelements (B) gesehen bis auf höchstens einen Absatz in einer Ebene verläuft.

11. Bodenelement nach Anspruch 10, **dadurch gekennzeichnet, dass** in Längsrichtung (L) des Bodenelements (B) gesehen jede Dickenzunahme zwischen den Zonen (E1,E2,E3) unterschiedlicher Dicke ausschließlich in Richtung des zwischen den Decklagen (1,10) begrenzen Raums stattfindet, so dass die Unterseite (US) des Bodenelements (B) vollständig in einer Ebene verläuft.

12. Bodenelement nach einem der voranstehenden Ansprüche,
**dadurch gekennzeichnet, dass** das Teilstück eine Scheuerplatte (Q1) ist.
